# NEUE EUROPÄISCHE PATENTSCHRIFT

(11) **EP 2 570 316 B2**
(45) Veröffentlichungstag und Bekanntmachung des Hinweises auf die Entscheidung über den Einspruch: **26.10.2022**
(45) Hinweis auf die Patenterteilung: 30.03.2016
(21) Anmeldenummer: 11181663.3
(22) Anmeldetag: 16.09.2011
(51) Int. Cl.: B60T 13/26, B60T 17/00, B60T 8/32

(54) **Nutzfahrzeug-Betriebsanlage**
Operating system for a commercial vehicle
Installation de service d'un véhicule utilitaire

(43) Veröffentlichungstag der Anmeldung: 20.03.2013
(73) Patentinhaber: Haldex Brake Products GmbH, 69123 Heidelberg (DE)
(72) Erfinder: Heer, Siegfried, 69168 Wiesloch (DE)
(74) Vertreter: REHBERG HÜPPE + PARTNER

(56) Entgegenhaltungen:
- EP-A1- 1 561 661
- EP-B1- 0 883 538
- DE-A1-102008 003 380

## Beschreibung

### TECHNISCHES GEBIET DER ERFINDUNG

Die vorliegende Erfindung betrifft eine Nutzfahrzeug-Betriebsanlage, in welcher einerseits ein über mindestens eine Steuereinheit gesteuertes elektromechanisches Bremssystem und andererseits eine pneumatische Druckluftaufbereitungseinrichtung für pneumatische Verbraucher eingesetzt ist.

### STAND DER TECHNIK

DE 103 14 643 B4 offenbart eine Druckluftaufbereitungseinrichtung, in welche ein Druckregler, ein Lufttrockner, ein Mehrkreisschutzventil und eine elektronische Steuereinheit zum Steuern von Ventilen des Druckreglers, des Lufttrockners und/oder des Mehrkreisschutzventils integriert sind. Die elektronische Steuereinheit der Druckluftaufbereitungseinrichtung ist hierbei auch für ein Steuern von Ventilen einer Luftfederanlage zuständig. Vorgeschlagen wird, dass die Ventile des Druckreglers, die Ventile des Lufttrockners, die Ventile des Mehrkreisschutzventils und die Ventile der Luftfederanlage in einer Baueinheit zusammengefasst sind. Ergänzend kann auch die gemeinsame elektronische Steuereinheit in der gemeinsamen Baueinheit angeordnet sein. Alternativ wird vorgeschlagen, dass die gemeinsame elektronische Steuereinheit mit elektrischen Steuerleitungen einerseits eine Baueinheit ansteuert, in der die Ventile des Druckreglers, die Ventile des Lufttrockners, die Ventile des Mehrkreisschutzventils angeordnet sind und andererseits über elektrische Steuerleitungen die Ventile der Luftfederanlage in einer weiteren Baueinheit ansteuert, wobei die beiden genannten Baueinheiten über pneumatische Leitungen in Verbindungen stehen können. Eine Steuerung eines Kompressors zur Druckluftversorgung der Druckluftaufbereitungseinrichtung kann ebenfalls durch die Steuereinheit erfolgen. Die Steuereinheit kann mit einer Anzeigevorrichtung, vorzugsweise in dem Fahrerhaus des Kraftfahrzeugs, verbunden sein. Diese Verbindung und/oder ein anderweitiger Datenaustausch der Steuereinheit der Druckluftaufbereitungseinrichtung kann über einen CAN-BUS erfolgen. In der Druckluftaufbereitungseinrichtung kann ein Vorsteuerventil eingesetzt sein, welches einerseits Ventile des Druckreglers, Ventile des Lufttrockners und/oder Ventile des Mehrkreisschutzventils und andererseits mindestens ein Ventil der Luftfederanlage ansteuert. Ventile der Luftfederanlage können aus Vorratsbehältern der beiden Betriebsbremskreise mit Druckluft versorgt werden. Hinsichtlich weiterer Details, insbesondere zur Zusammenfassung einzelner Bauelemente in einer oder mehreren Baueinheiten, zur elektrischen und pneumatischen Kommunikation der Baueinheiten, zur integrierten Steuerung durch eine Steuereinheit oder externen Ansteuerung der Baueinheiten durch externe Steuereinheiten, wird auf die Druckschrift DE 103 14 643 B4 verwiesen.

Weitere Ausgestaltungen einer derartigen Druckluftaufbereitungseinrichtung sind in DE 103 33 610 B4 offenbart. Hier erfolgt eine Be- und Entlüftung von Luftfederbälgen der Luftfederanlage durch die Luftaufbereitungseinrichtung selbst, indem zumindest ein Druckluft für die Luftfederanlage in einer ersten Schaltstellung bereitstellendes und in einer zweiten Schaltstellung entlüftendes Schaltventil in die Druckluftaufbereitungseinrichtung integriert ist. Dieses Schaltventil kann ein Magnetventil in Ausbildung und Verwendung als Vorsteuerventil oder ein direkt elektrisch schaltbares Ventil sein. Weiterhin kann in die Druckluftaufbereitungseinrichtung ein Ventil zum Anheben und Absenken einer Liftachse integriert sein. Vorgeschlagen wird auch die modulare Ausgestaltung der Druckluftaufbereitungseinrichtung mit einem ersten Modul für den Lufttrockner, den Druckregler und ein Regenerationsventil, mit einem zweites Modul für das Mehrkreisschutzventil und Drucksensoren zum Erfassen der Drücke in Verbraucherkreisen I bis IV, mit einem dritten Modul für die elektronische Steuereinheit sowie elektrisch ansteuerbare Vorsteuerventile, mit einem vierten Modul für pneumatisch ansteuerbare Ventile der Luftfederanlage und mit einem fünften Modul für elektrisch ansteuerbare Vorsteuerventile. Die Druckluftaufbereitungseinrichtung besitzt hier einen Ausgangsanschluss, welcher der Versorgung eines dem Anhänger zugeordneten Verbraucherkreises dient.

Bekannt ist darüber hinaus, in einem über eine Druckluftaufbereitungseinrichtung mit Druckluft versorgten Verbraucherkreis eines Anhängers ein Anhängersteuerventil anzuordnen, welches zwischen einen Vorratsbehälter und einen Kupplungskopf Bremse des Zugfahrzeugs zwischengeordnet ist.

EP 0 883 538 B1 offenbart eine zweikreisige Druckluftbremsanlage mit einem Betriebsbremskreis sowie einem Feststellbremskreis. Sowohl der Betriebsbremsdruck als auch der Feststellbremsdruck sowie ein Versorgungsdruck aus einem Behälter werden einem Anhängersteuermodul mit integriertem Anhängersteuerventil zugeführt, welches ausgangsseitig mit den Kupplungsköpfen Vorrat und Bremse verbunden ist. Über ein Bremspedal wird ein mit der Fußbetätigung des Bremspedals korrelierendes elektrisches Zugfahrzeug-Bremssignal sowie ein redundantes pneumatisches Zugfahrzeug-Bremssignal erzeugt. Die beiden genannten Zugfahrzeug-Bremssignale werden in einem elektrischen Steuerkreis bzw. pneumatischen Steuerkreis der Betriebsbremsanlage verarbeitet, wobei der elektrische Steuerkreis für die Steuerung einer Hinterachse des Zugfahrzeugs zuständig ist, während der pneumatische Steuerkreis für die Steuerung eines Bremskreises der Vorderachse des Zugfahrzeugs zuständig ist. In dem elektrischen Steuerkreis findet eine Steuereinheit Einsatz, welche über einen elektrischen Eingangsanschluss mit dem Anhängersteuermodul kommuniziert. Der pneumatische Steuerkreis kommuniziert entsprechend über eine pneumatische Steuerleitung mit einem pneumatischen Eingangsanschluss des Anhängersteuermoduls. Der der Feststellbremsanlage zugeordnete Verbraucherkreis ist rein pneumatisch ausgebildet mit einem handbetätigbaren Feststellbremsventil, welches über einen zusätzlichen pneumatischen Eingangsanschluss mit dem Anhängersteuermodul kommuniziert. Der elektrische Steuerkreis und elektrische Komponenten des Anhängersteuermoduls werden aus einer elektrischen Energieversorgung des Zugfahrzeugs gespeist. Der Steuereinheit des Anhängersteuermoduls können weitere last-, bremsdruck-, koppelkraft- und verschleißabhängige Steuersignale zugeführt werden. Das in das Anhängersteuermodul integrierte Anhängersteuerventil besitzt zwei pneumatische Steueranschlüsse. Ein erster Steueranschluss ist pneumatisch mit dem Feststellbremsventil verbunden, so dass über dieses entsprechend der Handbetätigung desselben ein Bremssteuerdruck an dem Kupplungskopf Bremse erzeugt werden kann. Der andere Steueranschluss ist in dem Anhängersteuermodul über ein elektrisch betätigtes Sperrventil, welches sich ohne elektrische Bestromung durch die Steuereinheit in seiner Durchlassstellung befindet, mit dem pneumatischen Steuerkreis der Betriebsbremsanlage verbunden, so dass ohne Bestromung dieses Sperrventils eine rein pneumatische Steuerung des Drucks am Kupplungskopf Bremse durch das Anhängersteuerventil entsprechend dem Druck in dem pneumatischen Steuerkreis der Betriebsbremse erfolgt. Für den Fall, dass dieses Sperrventil elektrisch durch die Steuereinheit des Anhängersteuermoduls in seine Sperrstellung geschaltet wird, kann an dem genannten zweiten Steueranschluss der pneumatische Steuerdruck durch die Steuereinheit elektrisch geregelt werden durch geeignete Ansteuerung eines mit einem Vorratsbehälter verbundenen Einlassventils sowie eines mit einer Entlüftung verbundenen Auslassventils. Während im Normalbetrieb eine elektronische Regelung und Modulierung des Bremsdrucks am Kupplungskopf Bremse über das Anhängersteuermodul erfolgt, kann bei Störung des elektrischen Steuerkreises eine pneumatische Steuerung des Bremsdrucks am Kupplungskopf Bremse erfolgen. Kumulativ kann eine Abbremsung des Anhängefahrzeugs durch Druckaufbau an dem ersten Steueranschluss über das handbetätigte Feststellbremsventil erfolgen.

Ein alternatives Anhängersteuermodul mit integriertem Anhängersteuerventil und einem elektrisch angesteuerten Sperrventil, welches in seiner Durchlassstellung die Ansteuerung des Anhängersteuerventils entsprechend dem pneumatischen Steuerkreis ermöglicht, sowie mit einem elektrisch angesteuerten Einlass- und Auslassventil zur elektrischen Ansteuerung des Anhängersteuerventils offenbart EP 1 022 204 A2**.** In diesem Fall erfolgt aber die Versorgung des Anhängersteuerventils mit Vorratsdruck über ein pneumatisch angesteuertes 2/2-Wegeventil, welches sich ohne Druck an dem Steueranschluss in seiner (uneingeschränkten) Durchlassstellung befindet. Der Steueranschluss dieses 2/2-Wegeventils ist mit dem pneumatischen Steueranschluss des Anhängersteuerventils verbunden. Überschreitet der Druck an dem Steueranschluss des Anhängersteuerventils einen Schwellwert, schaltet das 2/2-Wegeventil um in eine Drosselstellung, in welcher dem Vorratsanschluss des Anhängersteuerventils Druckluft von der Druckluftquelle lediglich gedrosselt zugeführt wird.

DE 10 2004 051 309 B4 offenbart die modulare Ausgestaltung einer elektro-pneumatischen Zentraleinheit eines Nutzfahrzeugs. Ein erstes Modul bildet eine elektronisch gesteuerte Einheit zur Luftaufbereitung, die einen Druckbegrenzer, ein Mehrkreisschutzventil, einen Lufttrockner, ein elektronisches Steuergerät beinhaltet und die Vorratsdrücke der Bremskreise und weiterer Pneumatikkreise steuert. Das erste Modul kann einen elektrischen Stecker für eine Energieversorgung sowie für einen Fahrzeugbus (CAN J1939) sowie weitere elektrische Anschlüsse besitzen. Darüber hinaus ist ein zweites Modul vorgesehen mit zur Steuerung der Drücke in den Federspeicherbremszylindern dienenden elektrisch ansteuerbaren Ventilen und einem Steuergerät, dessen Funktion aber auch von einem Steuergerät eines anderen Moduls übernommen werden kann. Auch dieses Modul kann einen Stecker und ggf. weitere Ventilblöcke beinhalten. Ein drittes Modul ist von einem Anhängersteuermodul gebildet, welches selber ein Steuergerät beinhalten kann oder welches durch ein Steuergerät eines anderen Moduls angesteuert wird. Vorgesehen sein kann ein Stecker zum Anschluss an das Steuergerät des elektronischen Bremssystems und ein pneumatischer Eingang zum Anschluss an einen EBS-Backupdruck und zur Verbindung mit einem Parkbremsmodul. Schließlich ist ein viertes Modul vorhanden, welches die elektronische Luftfederung steuert. Dieses vierte Modul kann elektrisch ansteuerbare Ventile zur Steuerung der Balgdrücke der Luftfederung beinhalten sowie ein Steuergerät, dessen Funktion aber auch von einem Steuergerät eines anderen Moduls übernommen sein kann. Stecker sind vorhanden zum Anschluss weiterer Komponenten, Ventilblöcke und einer Fernbedienung. Die genannten vier Module sind in miteinander in definierter Lage lösbar verbundenen Modulgehäusen untergebracht. Die Modulgehäuse besitzen standardisierte pneumatische und elektrische Anschlüsse derart, dass beim Verbinden der Modulgehäuse einander zugeordnete, an sich gegenüberliegenden Verbindungsflächen der Modulgehäuse angeordnete Anschlüsse direkte elektrische und pneumatische Verbindungen untereinander ausbilden.

DE 10 2004 009 469 A1 offenbart die Ausstattung der Räder eines Fahrzeugs jeweils mit elektromechanischen Bremsen. Eine Ansteuerung der elektromechanischen Bremsen erfolgt jeweils über zwei redundante Steuereinheiten, die permanent parallel arbeiten und einander bei einem Ausfall unverzüglich vollständig ersetzen können. Durch Entfall hydraulischer Bremsleitungen soll eine Leitungsverlegung zur Ansteuerung der Bremsaktuatoren einen verringerten Aufwand an Leitungsmaterial und Verlegungsarbeit erfordern.

DE 10 2008 031 327 A1 offenbart eine so genannte "hybride Bremsanlage", bei welcher Betriebsbremszylinder einer ersten Achse pneumatisch über ein ABS- oder EBS-Modul betätigt werden, während an einer zweiten Achse Federspeicherbremszylinder mit elektromechanischen Bremsen kombiniert sind. Die elektromechanischen Bremsen werden durch eine elektronische Steuereinheit angesteuert. Diese kann verschiedene Informationssignale empfangen, insbesondere Signale, die die elektromechanischen Bremsen betreffen. Hierbei kann es sich um Informationen über die von den Motoren der elektromechanischen Bremse geführten Ströme, die Motorposition, die Position von Einstelleinrichtungen, die Bremskraft, die Bremsreibung und die Bremsentemperatur handeln. Die elektronische Steuereinheit für die elektromechanischen Bremsen ist als selbstständige Einheit ausgebildet oder in eine andere Steuereinheit integriert, beispielsweise die Steuereinheit für die elektrische Feststellbremse oder die EBS-Steuereinheit. Ebenfalls vorgeschlagen wird, die elektronische Steuereinheit für die elektromechanische Bremse als untergeordnete Steuerung ("Slave") im Hinblick auf eine anderweitige übergeordnete Steuereinheit ("Master") auszulegen. In dem pneumatischen Teil der Bremsanlage sind in üblicher Anordnung und Reihenfolge ein Kompressor, eine Luftaufbereitungseinrichtung, ein Behälter, ein Fußbremsventil, ein Feststellbremsmodul, ein EBS-Betriebsbremsmodul und ein Anhängersteuermodul angeordnet.

Ein weiteres hybrides Bremssystem mit elektromechanischer Bremseinrichtung an einer Achse sowie pneumatischer Bremseinrichtung an einer anderen Achse ist aus DE 10 2008 003 380 A1 bekannt.

### AUFGABE DER ERFINDUNG

Der vorliegenden Erfindung liegt die Aufgabe zugrunde, eine für den Einsatz eines elektromechanischen Bremssystems verbesserte Nutzfahrzeug-Betriebsanlage vorzuschlagen.

### LÖSUNG

Die der Erfindung zugrunde liegende Aufgabe wird gelöst mit einer Nutzfahrzeug-Betriebsanlage mit den Merkmalen des Patentanspruchs 1. Weitere Ausgestaltungen der erfindungsgemäßen Lösung ergeben sich entsprechend den abhängigen Patentansprüchen 2 bis 16.

### BESCHREIBUNG DER ERFINDUNG

Erfindungsgemäß findet die Druckluftaufbereitungseinrichtung für ein Nutzfahrzeug, insbesondere ein Zugfahrzeug, welches optional mit einem Anhänger gekoppelt werden kann. In dem Nutzfahrzeug ist ein elektromechanisches Bremssystem eingesetzt. Die Betriebsbremse des Zugfahrzeugs kann hierbei vollständig als elektromechanisches Bremssystem ausgebildet sein, also ohne pneumatische Betriebsbremskreise. Ebenfalls möglich ist, dass ein hybrides Bremssystem Einsatz findet mit einem elektromechanischen Teilbremssystem, beispielsweise an einer Achse, sowie einem ergänzenden pneumatischen Teilbremssystem. Entsprechendes gilt für ein ergänzendes Feststellbremssystem, welches pneumatisch oder elektromechanisch ausgebildet sein kann.

Die Druckluftaufbereitungseinrichtung kann als verteilte Einrichtung mit mehreren elektrisch und/oder pneumatisch miteinander verbundenen Komponenten und singulären Einheiten ausgebildet sein. Vorzugsweise handelt es sich bei der Druckluftaufbereitungseinrichtung aber um eine Einheit mit einem gemeinsamen Gehäuse, wobei ebenfalls möglich ist, dass die Druckluftaufbereitungseinrichtung als modular aufgebaute Einheit ausgebildet ist.

Das elektromechanische Bremssystem wird entsprechend einem elektrischen Zugfahrzeug-Bremssignal betätigt. Demgemäß kann die Druckluftaufbereitungseinrichtung zusammen mit den an sich bekannten Vorteilen des Einsatzes eines elektromechanischen Bremssystems genutzt werden. Diese Vorteile bestehen insbesondere in den verbesserten Regelungsmöglichkeiten des elektromechanischen Bremssystems, die beispielsweise zu einer Verkürzung des Bremswegs des Nutzfahrzeugs und zu einer verbesserten Fahrstabilität während des Bremsvorgangs führen können.

In der Druckluftaufbereitungseinrichtung ist eine Steuereinheit zur Steuerung von Funktionen der Druckluftaufbereitungseinrichtung eingesetzt, wobei diese Steuereinheit eine singuläre Steuereinheit sein kann oder mit mehreren, miteinander vernetzten Teil-Steuereinheiten oder so genannten dualen oder mehrfachen Prozessoren ausgebildet sein kann. Möglich ist auch, dass die Steuereinheit für weitere Funktionen zusätzlich zur Steuerung der Druckluftaufbereitungseinrichtung zuständig ist.

Erfindungsgemäß besitzt die Druckluftaufbereitungseinrichtung (mindestens) einen Eingangsanschluss für ein Bremssignal. Der Eingangsanschluss kann ein elektrischer Eingangsanschluss sein. Alternativ oder zusätzlich möglich ist, dass der oder ein Eingangsanschluss pneumatisch ausgebildet ist, wobei der dem Eingangsanschluss zugeführte pneumatische Druck auch elektrisch vorgesteuert sein kann. Das dem Eingangsanschluss zugeführte elektrische Bremssignal korreliert in beliebiger Abhängigkeit zumindest mit dem elektrischen Zugfahrzeug-Bremssignal, wobei dieses vorzugsweise diesem entspricht oder proportional zu diesem ist. Bei dem dem Eingangsanschluss zugeführten, mit dem elektrischen Zugfahrzeug-Bremssignal korrelierenden Bremssignal handelt es sich um ein Bremssignal bezüglich einer Betriebsbremse, wobei dieses Bremssignal über ein Bremspedal erzeugt wird. Möglich ist, dass zusätzlich das dem Eingangsanschluss zugeführte, mit dem elektrischen Zugfahrzeug-Bremssignal korrelierende Bremssignal ein Bremssignal bezüglich einer Feststellbremse ist, wobei das Bremssignal über ein Betätigungssignal für eine Feststellbremse erzeugt wird. Möglich ist, dass dem Eingangsanschluss unmittelbar das elektrische Zugfahrzeug-Bremssignal für das elektromechanische Bremssystem zugeführt wird oder die Steuereinheit für das elektromechanische Bremssystem das Zugfahrzeug-Bremssignal modifiziert zu einem dem Eingangsanschluss zugeführten Bremssignal entsprechend den Anforderungen der Druckluftaufbereitungseinrichtung.

Darüber hinaus verfügt die Druckluftaufbereitungseinrichtung über einen Ausgangsanschluss, der an einen Anhänger anschließbar ist. Hierbei kann das Anschließen beispielsweise unmittelbar erfolgen, so dass der Ausgangsanschluss pneumatisch mit dem Kupplungskopf Bremse verbunden ist. Ebenfalls möglich ist, dass der Ausgangsanschluss lediglich mittelbar unter Zwischenschaltung weiterer elektrischer, elektropneumatischer oder pneumatischer Komponenten mit dem Anhänger, hier insbesondere dem Kupplungskopf Bremse, verbunden ist. Beispielsweise kann der Ausgangsanschluss über ein Anhängersteuerventil mit dem Anhänger verbunden sein.

Erfindungsgemäß wird dem Ausgangsanschluss ein mit einer Steuereinheit der Druckluftaufbereitungseinrichtung erzeugtes (elektrisches oder pneumatisches) Signal zugeführt, welches von dem über den elektrischen Eingangsanschluss der Steuereinheit zugeführten Bremssignal abhängig ist. Somit erfolgt durch die Druckluftaufbereitungseinrichtung erfindungsgemäß eine Wiedergabe und/oder Umwandlung des an dem Eingangsanschluss übermittelten Bremssignals zu dem Signal an dem Ausgangsanschluss. Das an dem Ausgangsanschluss bereitgestellte Signal kann beispielsweise abhängig sein von der Betätigung der Betriebsbremse, wobei das an dem Ausgangsanschluss bereitgestellte Signal zusätzlich abhängig sein kann von der Betätigung der Feststellbremse.

Für den Einsatz der Druckluftaufbereitungseinrichtung in einer Nutzfahrzeug-Betriebsanlage kann ermöglicht werden, dass
- zunächst eine Bremsanforderung durch einen Fahrer durch eine Steuereinheit des elektromechanischen Bremssystems erfasst wird,
- das elektromechanische Bremssystem geeignet zur Umsetzung der Bremsanforderung an dem Zugfahrzeug angesteuert wird,
- von der Steuereinheit ein geeignetes Bremssignal zur Übermittlung an den Eingangsanschluss der Druckluftaufbereitungseinrichtung erzeugt wird und
- dann mittels der Druckluftaufbereitungseinrichtung eine Aufbereitung dieses Bremssignals derart erfolgt, dass an dem Anhänger eine pneumatische Bremswirkung erzeugt wird, die passend ist zu der Anforderung des Fahrers an dem Zugfahrzeug und der mit dem elektromechanischen Bremssystem an dem Zugfahrzeug erzielten Bremswirkung.

Ebenfalls möglich ist allerdings, dass eine Bremsanforderung nicht (nur) durch den Fahrer vorgegeben wird, sondern diese alternativ oder zusätzlich automatisiert erzeugt wird.

Es versteht sich, dass für die Aufbereitung des Bremssignals für den Eingangsanschluss auch eine Steuereinheit verantwortlich sein kann, die nicht gleichzeitig für die Ansteuerung des elektromechanischen Bremssystems zuständig ist. Ebenfalls möglich ist, dass als Bremssignal für den Eingangsanschluss der Druckluftaufbereitungseinrichtung unmittelbar ein elektrisches Signal verwendet wird, welches von einem Bremsbetätigungsorgan wie einem Bremspedal für die Betätigung der Betriebsbremse abgeleitet wird, wobei möglich ist, dass das elektrische Signal zusätzlich von einem Bremshebel für die Betätigung einer Feststellbremse abgeleitet wird.

Bei dem Eingangsanschluss für das Bremssignal kann es sich um einen beliebigen pneumatischen und/oder elektrischen Eingangsanschluss handeln. Möglich ist die Ausbildung des Eingangsanschlusses als Anschluss für ein oder mehrere Kabel, als mindestens ein Stecker, als mindestens ein Anschluss für einen CAN-BUS, als mindestens ein Flexray-Anschluss u. ä. Möglich ist, dass über den Eingangsanschluss mehrere Bremssignale oder auch anderweitige Signale übertragen werden, was über unterschiedliche Signalleitungen des Eingangsanschlusses erfolgen kann oder bei entsprechender Kodierung über eine einzige Leitung erfolgen kann. Ebenfalls möglich ist, dass mehrere Eingangsanschlüsse vorgesehen sind.

In weiterer Ausgestaltung der Erfindung sind mindestens ein elektrischer Eingangsanschluss und die Steuereinheit der Druckluftaufbereitungseinrichtung derart ausgestaltet und der mindestens eine Eingangsanschluss ist mit der Steuereinheit der Druckluftaufbereitungseinrichtung derart verbunden, dass ein elektrisches Bremssignal, welches mit dem elektrischen Zugfahrzeug-Bremssignal zumindest korreliert, von zwei Steuereinheiten, die für eine redundante Ansteuerung des elektromechanischen Bremssystems zuständig sind, übertragbar ist. Das von diesen beiden Steuereinheiten entstammende elektrische Bremssignal kann dann durch die Steuereinheit verarbeitet werden. Diese Ausgestaltung der Erfindung ermöglicht die Verwendung der Druckluftaufbereitungseinrichtung in Verbindung mit einem redundanten elektromechanischen Bremssystem, welches vom Gesetzgeber aus Sicherheitsgründen vorgeschrieben ist. Für die Gewährleistung der Übertragung eines elektrischen Bremssignals von zwei Steuereinheiten an die Druckluftaufbereitungseinrichtung gibt es vielfältige Möglichkeiten. Um hier lediglich einige Beispiele zu nennen, verfügt im einfachsten Fall die Druckluftaufbereitungseinrichtung über einzelne Eingangsanschlüsse, die jeweils mit einer der beiden Steuereinheiten verbunden werden können. Es versteht sich, dass separate entsprechende Leitungen von den Steuereinheiten auch über einen gemeinsamen Stecker an die Druckluftaufbereitungseinrichtung übertragen werden können. Durchaus möglich ist aber auch, dass, beispielsweise über einen CAN-BUS oder über eine anderweitige Signalleitung, die Bremssignale von den beiden Steuereinheiten über eine gemeinsame elektrische Leitung übertragen werden, wenn hier eine entsprechende Kodierung des Signals erfolgt, die digital, beispielsweise durch entsprechende gekennzeichnete Datenpakete, erfolgen kann oder auch analog erfolgen kann. Hinsichtlich der Anpassung der Steuereinheit der Druckluftaufbereitungseinrichtung muss diese geeignet gestaltet sein, um einerseits die unterschiedlichen Signale von den redundanten Steuereinheiten empfangen und voneinander trennen zu können und andererseits diese beiden Signale zu verarbeiten, insbesondere zu erkennen, welches von zwei elektrischen Bremssignalen gerade relevant ist, also mit der tatsächlichen Betätigung des elektromechanischen Bremssystems korreliert. In einer möglichen Ausgestaltung ist die Steuereinheit für diesen Zweck mit einem dualen Prozessor ausgestattet. Des Weiteren muss die Steuereinheit über entsprechende Software verfügen, welche ein Management der unterschiedlichen Bremssignale ermöglicht, insbesondere erkennt, welches der beiden Signale Vorrang hat und ggf. ein von beiden Bremssignalen abhängiges Signal erzeugt, welches dann weiter verarbeitet wird, um das Signal an dem Ausgangsanschluss zu erzeugen. Um lediglich eine weitere Möglichkeit zu nennen, kann mittels der Steuereinheit einerseits ein Signal ausgewertet werden, welches einer der beiden Steuereinheiten entstammt und somit mit der Betätigung des elektromechanischen Bremssystems durch diese Steuereinheit korreliert, während ein weiteres Bremssignal unmittelbar dem Bremsbetätigungsorgan entnommen wird. Mittels der Steuereinheit können diese beiden Bremssignale, die unter Umständen eine unterschiedliche Qualität besitzen können, ausgewertet werden und/oder miteinander in Korrelation gesetzt werden. Eines der beiden Signale kann zur weiteren Verarbeitung verwendet werden oder es wird aus den beiden genannten Signalen ein neues Signal bestimmt. Möglich ist natürlich auch, dass die Steuereinheit mit zwei separaten und damit redundanten Teil-Steuereinheiten ausgebildet ist, wobei jeweils ein Bremssignal von einer Steuereinheit, die für eine redundante Ansteuerung des elektromechanischen Bremssystems zuständig sind, an eine Teil-Steuereinheit der Druckluftaufbereitungseinrichtung übertragen wird. Möglich ist auch, dass die Signale von den beiden Steuereinheiten für die elektromechanischen Bremssysteme jeweils an beide Teil-Steuereinheiten der Druckluftaufbereitungseinrichtung übertragen werden. Erfindungsgemäß kann auch eine Zugabstimmung durch eine parametrierbare Voreilung, insbesondere der am Anhänger erzeugten Bremskraft gegenüber der am Zugfahrzeug erzeugten Bremskraft, stattfinden, um eine optimale Abbremsung von Zugfahrzeug und Anhänger zu gewährleisten.

Im Rahmen der Erfindung wird das elektrische Bremssignal an dem Eingangsanschluss, insbesondere an den beiden Eingangsanschlüssen, durch eine oder mehrere Steuereinheiten verarbeitet. Diese Verarbeitung besteht im einfachsten Fall in einer reinen Durchleitung eines Bremssignals. Vorzugsweise erfolgt allerdings eine Anpassung des Bremssignals zu dem Signal an dem Ausgangsanschluss, um den besonderen Gegebenheiten des Bremssystems des Anhängers Rechnung zu tragen. Um lediglich ein einfaches Beispiel zu nennen, kann die Bremswirkung des Anhängers erst entstehen, wenn an dem Ausgangsanschluss ein Signal oberhalb eines Schwellwerts anliegt. Dementsprechend muss dann durch die Steuereinheit das an dem Eingangsanschluss anliegende Bremssignal entsprechend angepasst, also angehoben werden. Allgemeiner gesagt kann das elektromechanische Bremssystem eine andere Bremscharakteristik besitzen als das Bremssystem des Anhängers, was in unterschiedlichen Proportionalitätskonstanten zwischen der Ansteuerung der Bremssysteme, aber auch einer beliebigen unterschiedlichen nichtlinearen Abhängigkeit der Bremswirkung von der Ansteuerung der Bremssysteme bestehen kann. Mittels der Verarbeitung durch die Steuereinheit erfolgt eine "Anpassung" der unterschiedlichen Bremsverhalten oder Abhängigkeiten, so dass das dem Eingangsanschluss zur Verfügung gestellte Bremssignal umgewandelt wird in ein passendes Signal am Ausgangsanschluss für die (unmittelbare oder mittelbare) Ansteuerung des Bremssystems des Anhängers.

Die Energieversorgung der Druckluftaufbereitungseinrichtung kann beliebig erfolgen, wie dies für an sich bekannte Druckluftaufbereitungseinrichtungen aus dem Stand der Technik bekannt ist. Eine weitere Ausgestaltung der Erfindung nutzt die Tatsache aus, dass ein elektromechanisches Bremssystem angesichts der gesetzlichen Forderungen bereits über zwei redundante Batterien mit elektrischer Leistung versorgt sein kann. Diese redundanten Batterien sind bereits mit einer ausreichenden Kapazität zur Gewährleistung eines sicheren Betriebs versehen, da die redundanten Batterien so ausgebildet und unter Umständen überwacht werden, dass Sorge dafür getragen ist, dass in allen Betriebssituationen ausreichend und redundant genügend elektrische Leistung bereitgestellt wird oder Sicherheitsmaßnahmen getroffen sind, falls dieses einmal nicht der Fall sein sollte. Erfindungsgemäß verfügt die Druckluftaufbereitungseinrichtung für diese Ausgestaltung über einen elektrischen Speiseanschluss. Über diesen Speiseanschluss wird die Druckluftaufbereitungseinrichtung mit elektrischer Leistung von mindestens einer von zwei redundanten Batterien, vorzugsweise von beiden redundanten Batterien des elektromechanischen Bremssystems, versorgt. Durchaus möglich ist, dass die Steuereinheit hierbei so ausgebildet ist, dass jeweils die Nutzung elektrischer Leistung von der "richtigen" Batterie erfolgt, bei welcher es sich um die gerade von dem elektromechanischen Bremssystem genutzte Batterie handeln kann oder aber gerade um die andere Batterie. In weiterer Ausgestaltung ist allerdings zwischen die mindestens eine der beiden redundanten Batterien und den elektrischen Speiseanschluss mindestens eine externe Steuereinheit für das elektromechanische Bremssystem zwischengeschaltet. In diesem Fall kann die externe Steuereinheit, über die das elektromechanische Bremssystem angesteuert oder geregelt wird, auch genutzt werden, um den Leistungsfluss von der Energie von der mindestens einen Batterie zu der Druckluftaufbereitungseinrichtung zu steuern. Um hier lediglich ein einfaches Beispiel zu nennen, kann in Betriebssituationen, in welchen ein sehr niedriges Energielevel vorhanden ist, die externe Steuereinheit dafür Sorge tragen, dass vorrangig dem elektromechanischen Bremssystem elektrische Leistung zur Verfügung gestellt wird, um die Betriebssicherheit des Nutzfahrzeugs nicht zu gefährden, während elektrische Leistung zu der Druckluftaufbereitungseinrichtung nicht oder lediglich zur Gewährleistung eines Notbetriebs zur Verfügung gestellt wird.

In weiterer Ausgestaltung ist mindestens ein elektrischer Eingangsanschluss für ein elektrisches Bremssignal, welches mit dem elektrischen Zugfahrzeug-Bremssignal zumindest korreliert, als BUS-Anschluss und/oder als analoger Anschluss ausgebildet.

Durchaus möglich ist, dass das Anhängersteuerventil extern von der Druckluftaufbereitungseinrichtung angeordnet ist und beispielsweise über den Ausgangsanschluss mit der Druckluftaufbereitungseinrichtung kommuniziert, beispielsweise elektrisch und/oder pneumatisch angesteuert wird. In einer besonderen Ausgestaltung der Erfindung ist aber die Druckluftaufbereitungseinrichtung als eine Einheit ausgebildet, in welche das Anhängersteuerventil integriert ist, wovon auch umfasst ist, dass dieses modularer Bestandteil der Druckluftaufbereitungseinrichtung ist, also beispielsweise an andere Module der Druckluftaufbereitungseinrichtung angeflanscht ist. Hierdurch reduziert sich der Aufwand bei der Montage der Druckluftanlage. Des Weiteren reduziert sich die Zahl der bereitzustellenden Komponenten der Druckluftanlage. Die Druckluftaufbereitungseinrichtung mit integriertem Anhängersteuerventil ist darüber hinaus besonders kompakt ausgebildet. Unter Umständen kann durch die erfindungsgemäße Ausgestaltung auch die Betriebssicherheit erhöht werden, da die Versorgungs- und Steuerleitungen für das Anhängersteuerventil innerhalb der Druckluftaufbereitungseinrichtung verlaufen.

In weiterer Ausgestaltung der Erfindung besitzt das in die Druckluftaufbereitungseinrichtung integrierte Anhängersteuerventil einerseits einen elektrischen Steueranschluss, der mit der Steuereinheit der Druckluftaufbereitungseinrichtung verbunden ist. Über diesen elektrischen Steueranschluss kann dann ein Bremssteuerdruck an dem an den Anhänger anschließbaren Ausgangsanschluss erzeugt werden. Allerdings ist erfindungsgemäß die Druckluftaufbereitungseinrichtung mit dem darin integrierten Anhängersteuerventil redundant ausgebildet, indem das Anhängersteuerventil auch einen pneumatischen Steueranschluss aufweist. Dieser kann beispielsweise angesteuert werden durch ein Vorsteuerventil in Ausbildung als Magnetventil, welches durch die Steuereinheit der Druckluftaufbereitungseinrichtung angesteuert wird. Auch über den pneumatischen Steueranschluss kann der Bremssteuerdruck an dem Ausgangsanschluss erzeugt bzw. beeinflusst werden. Es versteht sich hierbei, dass der elektrische Steueranschluss und/oder der pneumatische Steueranschluss auch unmittelbar beaufschlagt werden können entsprechend der Betätigung eines Fußbremspedals und/oder eines Feststellbrems-Betätigungsorgans, insbesondere eines Feststellbremshebels, wobei mittels dieser Betätigungsorgane auch redundant ein elektrisches und ein pneumatisches Signal an die Steueranschlüsse übermittelt werden kann.

Für eine Ausgestaltung der Erfindung ist die Druckluftaufbereitungseinrichtung mit dem integrierten Anhängersteuerventil dafür ausgebildet, einen Ausgangsdruck des Anhängersteuerventils an dem Ausgangsanschluss zu erzeugen, welcher mit der Betätigung der elektromechanischen Betriebsbremse korreliert. In weiterer alternativer oder kumulativer Ausgestaltung besitzt das Anhängersteuerventil (auch) einen (elektrischen oder pneumatischen) Steueranschluss, über welchen eine Steuerung des Anhängersteuerventils entsprechend einer manuellen Betätigung einer Feststellbremse möglich ist.

Möglich ist, dass in der Druckluftaufbereitungseinrichtung eine Versorgung des Anhängersteuerventils über einen gesondert hierfür vorgesehenen Druckluftbehälter erfolgt. In bevorzugter Ausgestaltung besitzt die Druckluftaufbereitungseinrichtung einen mit einem Behälter gekoppelten pneumatischen Anschluss. Dieser ist multifunktional ausgebildet, indem dieser Anschluss sowohl für die Druckluftversorgung eines anderen Verbraucherkreises als auch für die Druckluftversorgung des Anhängersteuerventils zuständig ist. Beispielsweise handelt es sich bei dem anderen Verbraucherkreis um einen Feststellbremskreis, einen Luftfederkreis oder einen Nebenverbraucherkreis. Vorzugsweise befindet sich in der Druckluftanlage, in welcher die Druckluftaufbereitungseinrichtung eingesetzt ist, kein Behälter für einen Betriebsbremskreis, so dass die Druckluftaufbereitungseinrichtung auch keinen entsprechenden Anschluss für einen Betriebsbremskreis und einen zugeordneten Behälter besitzt.

In Weiterbildung dieses Gedankens kann in der Druckluftaufbereitungseinrichtung auch lediglich ein einziger Behälter mit einem pneumatischen Anschluss der Druckluftaufbereitungseinrichtung gekoppelt sein. Dieser einzige Behälter ist dann sowohl für die Druckluftversorgung sämtlicher anderweitigen Verbraucherkreise als auch für die Druckluftversorgung des Anhängersteuerventils zuständig. Hierdurch kann die Zahl der in dem Nutzfahrzeug vorzusehenden Behälter (welche Bauraum und Leitungsanschlüsse erfordern, die Bauteilvielfalt und das Gewicht erhöhen und gesonderte Regelungsmaßnahmen für die Druckverhältnisse in den Behältern erfordern) reduziert werden.

Das Anhängersteuerventil kann an sich beliebig, wie dies grundsätzlich auch aus dem Stand der Technik bekannt ist, ausgebildet sein. Für eine besondere Ausführungsform der Erfindung ist in dem Anhängersteuerventil ein Drosselventil angeordnet. Dieses Drosselventil gewährleistet eine Abrisssicherung, wie diese an sich aus dem Stand der Technik bekannt ist, vgl. insbesondere EP 1 022 204 A2.

In alternativer Ausgestaltung ist das Drosselventil nicht in das Anhängersteuerventil integriert. Vielmehr ist in diesem Fall stromaufwärts des Versorgungsanschlusses des Anhängersteuerventils ein (schaltbares) Drosselventil angeordnet. Hierbei kann die Ansteuerung des Drosselventils bspw. über eine gemeinsame Steuerleitung mit einem Steueranschluss des Anhängersteuerventils erfolgen.

Für eine andere Ausgestaltung der Erfindung ist stromaufwärts des Versorgungsanschlusses des Anhängersteuerventils ein (schaltbares) Sperrventil angeordnet. Dieses Sperrventil kann mehrere alternative oder kumulative Funktionen erfüllen. Einerseits kann dieses die Abrisssicherung gewährleisten, welche zuvor mit einem Drosselventil gewährleistet wurde. Bei entsprechender elektrischer Ansteuerung oder Vorsteuerung des Sperrventils kann dieses in die Sperrstellung überführt werden, während gleichzeitig durch die Steuereinheit dem Fahrer zur Kenntnis gebracht wird, dass ein Abriss erfolgt ist. Andererseits kann eine Art Wegfahrsperre durch das Sperrventil gewährleistet werden, für welche insbesondere ein Lösen einer Feststellbremse des Anhängers unterbunden wird, wenn das Zugfahrzeug noch nicht fahrbereit ist. Dies kann beispielsweise der Fall sein, wenn Behälter der Druckluftanlage mit Inbetriebnahme des Zugfahrzeugs noch nicht hinreichend gefüllt sind. Ebenfalls kann das Sperrventil in die Sperrstellung zur Bildung einer Wegfahrsperre genutzt werden, wenn anhand einer Fehlerdiagnose erkannt wird, dass das elektromechanische Bremssystem nicht oder nicht vollständig funktionsfähig ist. Um hier lediglich ein Beispiel zu nennen, kann das Sperrventil in die Sperrstellung überführt werden, wenn die Batterie oder redundante Batterien des elektromechanischen Bremssystems nicht hinreichend geladen sind. Schließlich kann das Sperrventil mittels der elektrischen Ansteuerung auch die Funktion eines ansonsten für diesen Kreis vorzusehenden Überströmventils übernehmen, so dass unter Umständen dieser Kreis lediglich über das Sperrventil mit vorgeordnetem odeer nachgeordnetem Druckbegrenzungsventil betrieben wird. Es versteht sich, dass auch das Druckbegrenzungsventil entfallen kann, wobei dann das Sperrventil die Druckbegrenzungsfunktion übernehmen kann, indem mit Überschreiten eines Schwelldrucks das Sperrventil in seine Sperrstellung überführt wird. Diese Funktion kann auch durch ein sperrbares Druckbegrenzungsventil übernommen werden.

In weiterer Ausgestaltung der Erfindung besitzt das Anhängersteuerventil einen Steueranschluss für ein Steuersignal entsprechend einer Betätigung einer Betriebsbremse sowie einen Steueranschluss für ein Steuersignal entsprechend einer Betätigung einer Feststellbremse. Der Steueranschluss für die Feststellbremse wird automatisiert durch die Steuereinheit beaufschlagt, wenn erkannt wird, dass die Betätigung des Anhängersteuerventils während einer Betriebsbremsung nicht zu der gewünschten Bremswirkung erfolgt. Eine derartige Erkennung kann beispielsweise erfolgen über einen Kopplungskraftsensor, welcher erkennt, dass der Anhänger auf das Zugfahrzeug aufläuft. Ebenfalls möglich ist, dass die nicht funktionsfähige Ansteuerung des Anhängersteuerventils über den Steueranschluss für die Betriebsbremsung erkannt wird, indem eine Überwachung des Ausgangsdrucks des Anhängersteuerventils über einen Drucksensor erfolgt und ein Vergleich des überwachten Drucks mit einem Solldruckverlauf erfolgt. Ebenfalls möglich ist, dass die für die Beaufschlagung des Steueranschlusses für die Betriebsbremsung verantwortlichen Komponenten hinsichtlich ihrer Funktion überwacht werden. Wird beispielsweise erkannt, dass ein für die Erzeugung des Steuerdrucks verantwortliches Magnetventil einen Leitungsbruch besitzt oder nicht funktionsfähig ist, beispielsweise anhand der Steuerströme für dieses Magnetventil, kann der Redundanzanschluss in der genannten Weise von der Steuereinheit angesteuert werden. Für diese Erfindungsgemäß Ausgestaltung bildet der Steueranschluss des Anhängersteuerventils für die Feststellbremse einen Redundanzanschluss für eine Betriebsbremsung.

In weiterer Ausgestaltung der Erfindung ist in der Druckluftaufbereitungseinrichtung ein multifunktionales Vorsteuerventil vorgesehen. Dieses ist sowohl für die Steuerung des Anhängersteuerventils zuständig als auch für ein Druckluftmanagement zuständig, also beispielsweise für die Ansteuerung eines Druckreglers, einer Druckluftversorgung mittels eines Kompressors, die Steuerung von einem Lastbetrieb und einem Regenerationsbetrieb, die Zufuhr von Druckluft zu Verbraucherkreisen abseits des Anhängersteuerkreises u. ä.

Gemäß einem weiteren Vorschlag der Erfindung ist die Druckluftaufbereitungseinrichtung zur Herbeiführung einer Streckbremsfunktion und/oder einer Prüffunktion ausgebildet. Eine Streckbremsfunktion wird dazu eingesetzt, einen Kraftwagenzug, der mit einem Zugfahrzeug und mindestens einem Anhänger gebildet ist, in einen gestreckten Zustand zu verbringen. Die Streckbremsfunktion wird dadurch herbeigeführt, dass eine Bremse eines Anhängers stärker betätigt wird als die Bremse des Zugfahrzeugs, was im einfachsten Fall durch alleinige Betätigung der Betriebsbremse des Anhängers erfolgt. Somit setzt die Gewährleistung einer Streckbremsfunktion eine Betätigung der Betriebsbremse des Anhängers unabhängig oder abweichend von der Betriebsbremse des Zugfahrzeugs voraus, wobei vorzugsweise eine dosierte Betätigung der Betriebsbremse des Anhängers gewünscht ist. Zur Gewährleistung der Streckbremsfunktion kann die Druckluftaufbereitungseinrichtung zunächst einen Eingangsanschluss besitzen, über welchen ein Signal an die Druckluftaufbereitungseinrichtung, insbesondere die Steuereinheit, übertragbar ist, welches indiziert, dass eine Streckbremsfunktion einzuleiten ist. Dieses Signal kann automatisiert durch eine externe Steuereinheit in einschlägigen Betriebs- öder Umgebungssituationen erzeugt und übertragen werden. Ebenfalls möglich ist, dass dieses Signal vom Fahrer manuell vorgegeben wird. Auch möglich ist, dass kein derartiges Signal übertragen wird, sondern die Steuereinheit der Druckluftaufbereitungseinrichtung automatisiert in einschlägigen Betriebs- oder Umgebungssituationen eine Streckbremsfunktion einleitet. Andererseits muss die Software auf der Steuereinheit geeignet programmiert sein, dass ein Wunsch nach einer Streckbremsfunktion umgesetzt wird. Somit kann die Steuereinheit ein Anhängersteuerventil zur Erzeugung einer (dosierbaren) Bremswirkung ansteuern, obwohl das elektrische Bremssignal von dem elektromechanischen Bremssystem, welches an dem Eingangsanschluss anliegt, keine Betriebsbremsung über das elektromechanische Bremssystem signalisiert. Entsprechend ist möglich, dass das Ausgangssignal an dem Ausgangsanschluss mit einer stärkeren Abbremsung des Anhängers als der Abbremsung des elektromechanischen Bremssystems an dem Zugfahrzeug korreliert.

Für die Gewährleistung einer Prüffunktion muss der Druckluftaufbereitungseinrichtung einerseits entsprechend ein Signal zugeführt werden, dass die Prüffunktion von dem Fahrer gewünscht wird. Andererseits muss die Steuereinheit geeignet programmiert werden, dass das Signal an dem Ausgangsanschluss entsprechend der Prüffunktion erzeugt wird. Die Prüffunktion erfordert, dass geprüft wird, ob der Kraftwagenzug durch alleinige Bremsung des Anhängers mittels der Feststellbremse im Stillstand gehalten werden kann. Somit muss auch für die Prüffunktion die über das Signal an dem Ausgangsanschluss erzeugte Bremswirkung von dem am Eingangssignal anstehenden Zugfahrzeug-Bremssignal, welches mit der Beaufschlagung des elektromechanischen Bremssystems korreliert, abweichen.

Erfindungsgemäß findet eine Druckluftaufbereitungseinrichtung der zuvor erläuterten Art Einsatz in einer Nutzfahrzeug-Betriebsanlage. Die Nutzfahrzeug-Betriebsanlage verfügt neben der Druckluftaufbereitungseinrichtung über ein elektromechanisches Bremssystem, welches über eine Steuereinheit, insbesondere zwei redundante Steuereinheiten, gesteuert wird entsprechend einem elektrischen Zugfahrzeug-Bremssignal. Die eine Steuereinheit, insbesondere die beiden redundanten Steuereinheiten, für das elektromechanische Bremssystem und der oder ein Eingangschluss oder mehrere Eingangsanschlüsse der Druckluftaufbereitungseinrichtung sind über eine Steuerleitung miteinander verbunden. Über diese Steuerleitung wird das Bremssignal, welches mit dem elektrischen Zugfahrzeug-Bremssignal zumindest korreliert, übertragen. Bei der Steuerleitung kann es sich um eine beliebige elektrische Leitung oder mehrere elektrische Leitungen mit einem oder mehreren Steckern handeln. Ebenfalls möglich ist die Ausbildung der Steuerleitung als mindestens ein CAN-BUS. Auch möglich ist, dass alternativ oder kumulativ eine pneumatische Steuerleitung zum Einsatz kommt zwecks Verbindung der Steuereinheit des elektromechanischen Bremssystems und der Druckluftaufbereitungseinrichtung.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Anschluss oder einer Steuereinheit die Rede ist, ist dies so zu verstehen, dass
- genau ein Anschluss oder eine Steuereinheit,
- zwei Anschlüsse oder Steuereinheiten oder
- mehr als zwei Anschlüsse oder Steuereinheiten in beliebiger Anzahl
vorhanden sein können.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1 bis Fig. 9**: zeigen jeweils zumindest einen Teil einer erfindungsgemäßen Nutzfahrzeug-Betriebsanlage mit einem elektromechanischen Bremssystem und einer Druckluftaufbereitungseinrichtung.
- **Fig. 10 bis Fig. 18**: zeigen schematisch Druckluftaufbereitungseinrichtungen mit deren Verbindungen mit weiteren Komponenten einer Nutzfahrzeug-Betriebsanlage.

### FIGURENBESCHREIBUNG

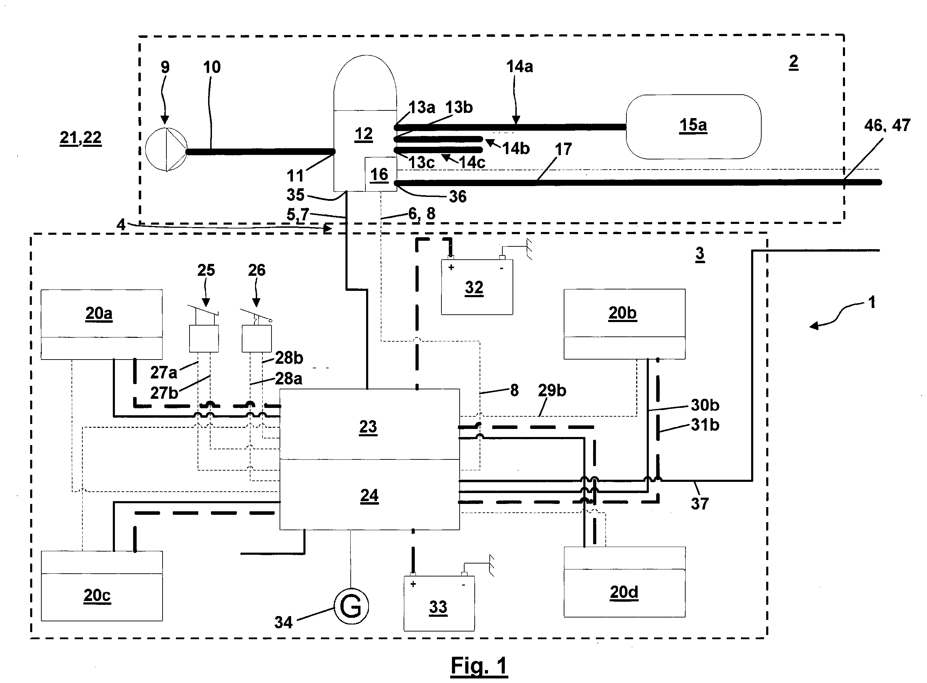

**Fig. 1** zeigt eine Nutzfahrzeug-Betriebsanlage 1, die mit einer Druckluftanlage 2 und einem elektromechanischen Bremssystem 3 gebildet ist. Die Druckluftanlage 2 und das elektromechanische Bremssystem 3 sind über mindestens eine Schnittstelle 4 und zugeordnete Leitungen, Stecker u. ä. miteinander gekoppelt. Für das in Fig. 1 dargestellte Ausführungsbeispiel werden über die Schnittstellen 4 Zugfahrzeug-Bremssignale 5, 6 von dem elektromechanischen Bremssystem 3 an die Druckluftanlage 2 übertragen, wobei auch weitere ergänzende Signale unioder bidirektional übertragen werden können. Vorzugsweise erfolgt die Übertragung des Zugfahrzeug-Bremssignals 5 über einen Datenbus 7, während die Übertragung des Zugfahrzeug-Bremssignals 6 über eine analoge Leitung 8 erfolgt.

Die Druckluftanlage 2 ist hier lediglich stark vereinfacht dargestellt, wobei dem Fachmann der grundsätzliche Aufbau von derartigen Druckluftanlagen 2 bekannt ist. Die hier dargestellte Druckluftanlage 2 besitzt einen Kompressor 9, der über eine Versorgungsleitung 10 einen Versorgungsanschluss 11 einer Druckluftaufbereitungseinrichtung 12 mit Druckluft versorgt. Die Druckluftaufbereitungseinrichtung 12 ist über Anschlüsse 13a, 13b, 13c mit Verbraucherkreisen 14a, 14b, 14c verbunden, die über Vorratsbehälter 15 verfügen können. Die Verbraucherkreise 14 werden von der Druckluftaufbereitungseinrichtung 12 mit Druckluft versorgt, wobei die Druckluftaufbereitungseinrichtung 12 die Druckluftströme, insbesondere unter Nutzung eines integrierten, an sich bekannten Mehrkreisschutzventils in beliebiger Ausgestaltung, steuert. Möglich ist, dass über einen Behälter 15a eines Verbraucherkreises 14a, insbesondere in besonderen Betriebssituationen und u. U. unter Steuerung durch die Druckluftaufbereitungseinrichtung 12, eine Speisung anderer Verbraucherkreise 14b, 14c erfolgt. Beispielsweise handelt es sich bei einem Verbraucherkreis um einen Nebenverbraucherkreis, während es sich bei einem anderen Verbraucherkreis um einen Luftfederkreis handelt und bei einem weiteren Verbraucherkreis um einen Anhängerbremskreis handelt. Vorzugsweise besitzt die Druckluftanlage 2 keinen Betriebsbremskreis und/oder Feststellbremskreis und keine derartigen Kreisen zugeordnete Behälter 15 sowie Anschlüsse 13.

Für das in Fig. 1 dargestellte Ausführungsbeispiel ist in die Druckluftaufbereitungseinrichtung 12 ein Anhängersteuerventil 16 integriert. Über das Anhängersteuerventil 16 wird die pneumatische Beaufschlagung eines pneumatischen Anhängerbremskreises 17, insbesondere die pneumatische Druckbeaufschlagung eines Kupplungskopfs Vorrat 18 und/oder eines Kupplungskopfs Bremse 19 gesteuert, was in Abhängigkeit von den Zugfahrzeug-Bremssignalen 5, 6 durch das Anhängersteuerventil 16 und/oder die Druckluftaufbereitungseinrichtung 12 erfolgt.

Das elektromechanische Bremssystem 3 verfügt über entsprechend mindestens einem Zugfahrzeug-Bremssignal beaufschlagte elektromechanische Bremsaktuatoren 20a-20d, welche paarweise unterschiedlichen Achsen sowie, für das in Fig. 1 dargestellte Ausführungsbeispiel mit lediglich zwei Achsen, paarweise unterschiedlichen Seiten des Nutzfahrzeugs 21, hier eines Zugfahrzeug 22, zugeordnet sein können. Die Erzeugung der steuernden Zugfahrzeug-Bremssignale, welche den elektromechanischen Bremsaktuatoren 20a-20d zugeführt werden, sowie der hiermit korrelierenden Zugfahrzeug-Bremssignale 5, 6, die über die Schnittstellen 4 zu der Druckluftanlage 2 übertragen werden, erfolgt durch redundante Steuereinheiten 23, 24 für das elektromechanische Bremssystem 3, die separat voneinander ausgebildet und miteinander vernetzt sein können, in einem gemeinsamen Gehäuse oder auf einer gemeinsamen Platine angeordnet sein können oder als duale Prozessoren ausgebildet sein können. Eine Ermittlung der Zugfahrzeug-Bremssignale 5, 6 erfolgt in Abhängigkeit einer Betätigung eines Betätigungsorgans 25 für eine Betriebsbremse, hier ein Brems-Fußpedal, und/oder eines Betätigungsorgans 26 für eine Feststellbremse, hier ein Feststellbremshebel. Aufgrund einer Betätigung durch den Fahrer erzeugte Ausgangssignale der Betätigungsorgane 25, 26 werden jeweils über redundante Leitungen 27a, 27b an beide Steuereinheiten 23, 24 übertragen. Bei den Leitungen 27, 28 handelt es sich vorzugsweise um analoge Leitungen, wobei auch beliebige anders ausgebildete Leitungen hierzu Einsatz finden können.

Die Ansteuerung eines Bremsaktuators 20 soll beispielsweise für die Ansteuerung des Bremsaktuators 20b in Fig. 1 erläutert werden: Von beiden Steuereinheiten 23, 24 kann ein Zugfahrzeug-Bremssignal an den Bremsaktuator 20b übertragen werden. Für das dargestellte Ausführungsbeispiel erfolgt dies von der Steuereinheit 23 über eine analoge Leitung 29b, während dies von der Steuereinheit 24 über einen Datenbus 30b erfolgt. Darüber hinaus wird der Bremsaktuator 20b über mindestens eine elektrische Versorgungsleitung 31b mit elektrischer Leistung versorgt. Die Leistungsversorgung wird durch die Steuereinheit 23 und/oder die Steuereinheit 24 gesteuert.

Für das in Fig. 1 dargestellte Ausführungsbeispiel steuert die Steuereinheit 23 sich diametral gegenüberliegende Bremsaktuatoren 20b, 20c über analoge Leitungen 29b, 29c an, während diese Steuereinheit 23 die anderen, sich diametral gegenüberliegenden Bremsaktuatoren 20a, 20d über Datenbusse 30a, 30d ansteuert. Hingegen steuert die Steuereinheit 24 die Bremsaktuatoren 20b, 20c über Datenbusse 30b, 30c an, während die Bremsaktuatoren 20a, 20d von dieser Steuereinheit 24 über analoge Leitungen 29a, 29d angesteuert werden. Die Leistungsversorgung der Bremsaktuatoren 20b, 20c über die Versorgungsleitungen 31b, 31c wird über die Steuereinheit 24 gesteuert, während die Leistungsversorgung der Bremsaktuatoren 20a, 20d über die Versorgungsleitungen 31a, 31d über die Steuereinheit 23 gesteuert wird.

Das elektromechanische Bremssystem 3 verfügt über redundante Batterien 32, 33, wobei eine Batterie 32 die Steuereinheit 23 mit elektrischer Leistung versorgt, vorzugsweise zur gesteuerten oder geregelten Weitergabe der Leistung an die Bremsaktuatoren 20a, 20d, während die Batterie 33 die Steuereinheit 24 mit elektrischer Leistung versorgt, vorzugsweise zur gesteuerten oder geregelten Weitergabe an die Bremsaktuatoren 20b, 20c.

Das elektromechanische Bremssystem 3 verfügt darüber hinaus über einen Generator 34, dessen elektrische Ausgangsleistung den Steuereinheiten 23, 24 zugeführt wird, die das Laden der Batterien 32, 33 steuern. Die von dem Generator 34 umgewandelte Energie ist insbesondere dem Antriebsstrang und/oder einer Bewegungsenergie des Nutzfahrzeugs 21 entnommen.

Die Zugfahrzeug-Bremssignale 5, 6, welche an die Druckluftanlage 2 und die Druckluftaufbereitungseinrichtung 12 bzw. das Anhängersteuerventil 16 übertragen werden, hängen in beliebiger Abhängigkeit ab von den Zugfahrzeug-Bremssignalen, welche an die Bremsaktuatoren 20a-20d übermittelt werden und/oder von einer Betätigung der Betätigungsorgane 25, 26 durch den Fahrer. Die Zugfahrzeug-Bremssignale 5, 6 werden durch die Steuereinheiten 23, 24 entsprechend den beliebigen Abhängigkeiten unter Berücksichtigung der Ausgangssignale der Betätigungsorgane 23, 24 erzeugt.

Die Zugfahrzeug-Bremssignale 5, 6 werden der Druckluftaufbereitungseinrichtung 12 und/oder dem Anhängersteuerventil 16 über Eingangsanschlüsse 35, 36 zugeführt. Möglich ist auch, dass zumindest eine der Steuereinheiten 23, 24 über eine elektrische Leitung 37, vorzugsweise über einen Datenbus, mit dem Anhänger kommuniziert. Über diese elektrische Leitung kann insbesondere ein elektrisches Zugfahrzeug-Bremssignal über eine geeignet ausgebildete Schnittstelle an einen Anhänger übertragen werden, was beispielsweise ermöglicht, dass derselbe Anhänger sowohl pneumatisch als auch elektrisch angesteuert werden kann zur Erweiterung der Steuerungsmöglichkeiten und/oder zur redundanten Ansteuerung des Anhängers auf elektrischem und pneumatischem Weg. Ebenfalls möglich ist, dass alternativ der Anschluss eines pneumatisch gebremsten Anhängers und eines elektromechanisch gebremsten Anhängers ermöglicht wird, wenn zusätzlich zu dem pneumatischen Anhängerbremskreis 17 ein elektrisches Signal über die Leitung 37 übertragbar ist.

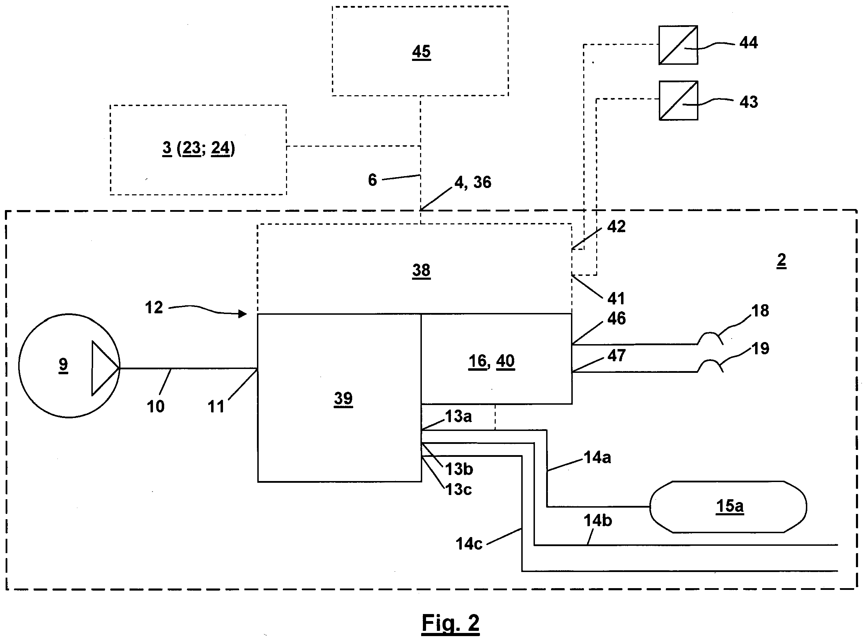

Gemäß Fig. 2 ist in der Druckluftanlage 2 die Druckluftaufbereitungseinrichtung 12 mit einer Steuereinheit 38 ausgestattet, welche über eine Schnittstelle 4, hier ein Eingangsanschluss 36, mit dem Bremssystem 3, insbesondere zumindest einer der Steuereinheiten 23, 24, kommuniziert und das Zugfahrzeug-Bremssignal 6, 7 empfängt. Weiterhin verfügt die Druckluftaufbereitungseinrichtung 12 über eine rein pneumatisch, elektrisch oder elektropneumatisch ausgebildete Komponente 39, mittels welcher eine Druckluftversorgung und Steuerung der Druckluftströme der Druckluftaufbereitungseinrichtung 12 mit den Verbraucherkreisen 14a-14c erfolgt. Hinsichtlich grundsätzlicher Ausgestaltungsmöglichkeiten der Komponente 39, der Verbindung derselben mit weiteren Bauelementen, der Ansteuerung und Verbindung mit der Steuereinheit 38 wird vollumfänglich auf die Druckschriften DE 103 14 643 B4 und DE 103 33 610 B4 der Anmelderin verwiesen.

Darüber hinaus besitzt die Druckluftaufbereitungseinrichtung 12 ein Anhängersteuerventil 40, über welches eine pneumatische Beaufschlagung des Kupplungskopfes Vorrat 18 und des Kupplungskopfes Bremse 19 erfolgt. Die Steuereinheit 38, die Komponente 39 und das Anhängersteuerventil 40 bilden gemäß Fig. 2 eine als Baueinheit ausgebildete Druckluftaufbereitungseinrichtung, welche modular ausgebildet sein kann. Der Steuereinheit 38 der Druckluftaufbereitungseinrichtung 12 werden über Eingangsanschlüsse 41, 42 Messsignale von Sensoren 43, 44 zugeführt, bei welchen es sich um beliebige Sensoren handeln kann. Um lediglich einige Beispiele zu nennen, kann es sich bei den Sensoren 43, 44 um einen Drucksensor, einen Kopplungskraftsensor zwischen Zugfahrzeug und Anhänger, einen Beladungssensor, einen Gierwinkelsensor, einen Bremskraftsensor u. ä. handeln. Zwischen den Steuereinheiten 23, 24 einerseits und der Steuereinheit 38 erfolgt ein Datenaustausch und die Abstimmung der Betriebsweisen, wobei die auf den Steuereinheiten ablaufenden Prozesse parallelisiert sein können oder auf ein Signal einer anderen Steuereinheit warten können. Weiterhin sind die Steuereinheiten 23, 24, 38 vernetzt mit einer Betätigungs- und Anzeigeeinrichtung 45, über welche beispielsweise der Fahrer Wünsche an die Steuereinheiten 23, 24, 38 übertragen kann und die Steuereinheiten 23, 24, 38 Informationen an den Fahrer übermitteln können.

Über die Komponente 39 erfolgt vorzugsweise ein Druckluftmanagement mit dem Ziel der Bereitstellung von Druckluft mit den je nach Betriebsbedingungen gewünschten Drücken an den Anschlüssen zu den Verbraucherkreisen sowie eine Druckluftbehandlung zur Bereitstellung von Druckluft in dem richtigen Zustand, insbesondere mittels einer Trocknung der Druckluft sowie mit einer Steuerung von Last- und Regenerationsphasen sowie der Ansteuerung eines Druckreglers.

Vorzugsweise erfolgt gemäß Fig. 2 eine Speisung des Anhängersteuerventils 40 über den Behälter 15a über die Komponente 39. Abweichend zu der in fig. 2 dargestellten Ausgestaltung ist es auch möglich, dass das Anhängersteuerventil 40 unmittelbar mit dem Behälter 15a verbunden ist (s. gestrichelte Leitungsverbindung).

Die Druckluftaufbereitungseinrichtung 12 verfügt über zwei Ausgangsanschlüsse 46, 47, die hier Ausgangsanschlüsse des Anhängersteuerventils 40 sind. Die Ausgangsanschlüsse 46, 47 sind mit den Kupplungsköpfen 18, 19 unmittelbar pneumatisch verbunden.

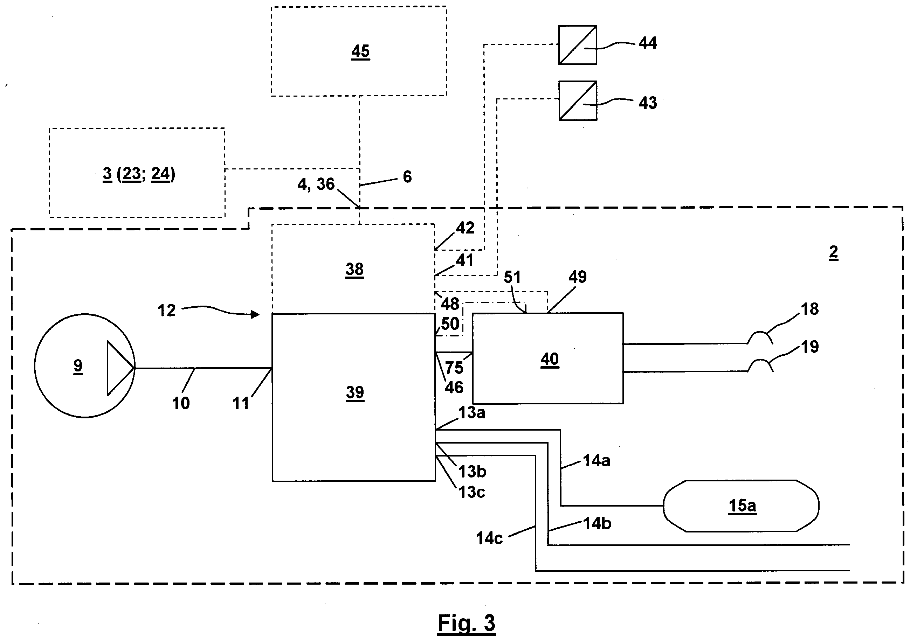

Für das in **Fig. 3** dargestellte Ausführungsbeispiel ist abweichend zu Fig. 2 das Anhängersteuerventil 40 als Modul oder singuläre Baueinheit separat von der Druckluftaufbereitungseinrichtung 12 ausgebildet, die somit beabstandet von der Druckluftaufbereitungseinrichtung 12 angeordnet sein kann. Hier besitzt die Komponente 39 einen Ausgangsanschluss 46, der beispielsweise der Druckluftversorgung des Anhängersteuerventils 40 dienen kann. Die Steuereinheit 38 besitzt einen elektrischen Ausgangsanschluss, welcher mit einem Steueranschluss 49 des Anhängersteuerventils 40 verbunden ist. Alternativ oder kumulativ kann ein pneumatischer Ausgangsanschluss 50 an der Komponente 12 vorgesehen sein, der mit einem pneumatischen Steueranschluss 51 des Anhängersteuerventils 40 verbunden sein kann. Die Steuereinheit 38 erzeugt aus dem Zugfahrzeug-Bremssignal 6 geeignete elektrische oder pneumatische Steuersignale an den Ausgangsanschlüssen 48, 50, die dann über entsprechende Leitungsverbindungen den Steueranschlüssen 49, 51 des Anhängersteuerventils 40 zugeführt werden, mittels dessen dann nach Maßgabe der Steuersignale die Drücke an Ausgangsanschlüssen des Anhängersteuerventils 40 und damit letztendlich an den Kupplungsköpfen 18, 19 erzeugt werden. Die Ansteuerung durch die beiden Ausgangsanschlüsse 48, 50 kann eine redundante Ansteuerung des Anhängersteuerventils 40 gewährleisten, nämlich einerseits mittels einer elektrischen Ansteuerung und andererseits, beispielsweise bei Versagen der elektrischen Ansteuerung, mittels der pneumatischen Ansteuerung.

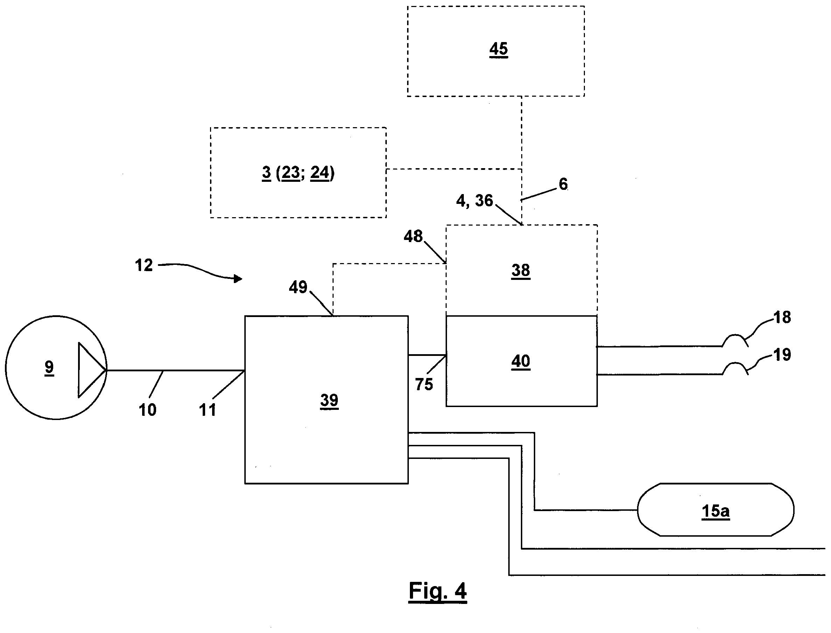

Für das in **Fig. 4** dargestellte Ausführungsbeispiel ist (bei ansonsten entsprechender Ausgestaltung zu Fig. 3) die Steuereinheit 38 als eine Baueinheit mit dem Anhängersteuerventil 40 ausgebildet. In der hier mit mehreren singulären Baueinheiten gebildeten Druckluftaufbereitungseinrichtung 12 verfügt die Steuereinheit 38 über einen elektrischen Ausgangsanschluss 48, über welchen ein elektrisches Steuersignal einem elektrischen Steueranschluss 49 der Komponente 39 zugeführt werden kann.

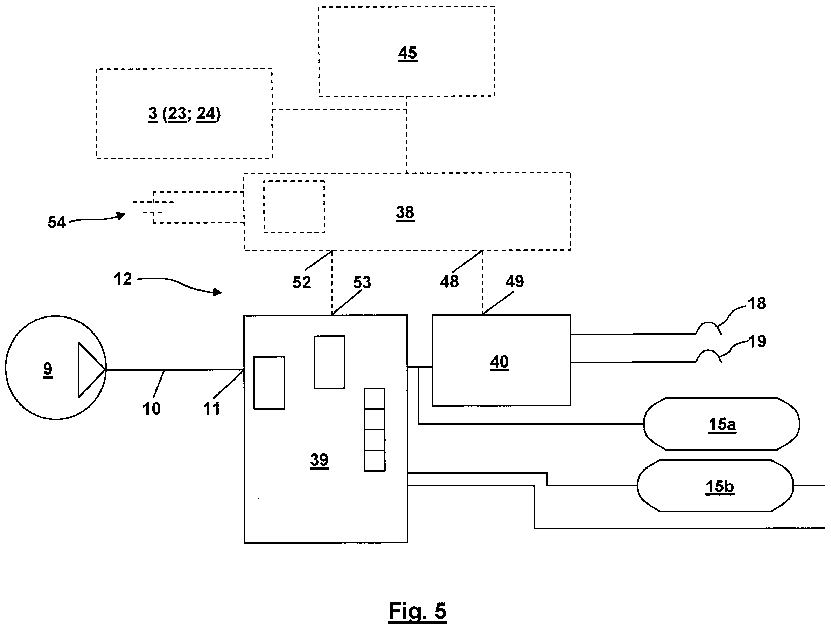

Gemäß dem in **Fig. 5** dargestellten Ausführungsbeispiel sind in der Druckluftaufbereitungseinrichtung 12 die Steuereinheit 38, die Komponente 39 und das Anhängersteuerventil 40 jeweils als singuläre Baueinheiten ausgebildet. In diesem Fall besitzt die Steuereinheit 38 neben dem elektrischen Ausgangsanschluss 48 zur Ansteuerung eines elektrischen Steueranschlusses 49 des Anhängersteuerventils 40 einen weiteren elektrischen Ausgangsanschluss 52, der mit einem elektrischen Steueranschluss 53 der Komponente 39 verbunden ist. Weiterhin ist für dieses Ausführungsbeispiel der Anhängerbremskreis 17 mit einem Behälter 15a ausgestattet, welcher einerseits von der Komponente 39 mit Druckluft versorgt wird und andererseits unmittelbar einen Versorgungsanschluss des Anhängersteuerventils 40 mit Druckluft versorgt. Möglich ist, dass dieser Behälter 15a auch eine sogenannte Querspeisung von weiteren Verbraucherkreisen durch geeignete Steuerung der Druckluftströme durch die Komponente 39 ermöglicht. Hinsichtlich der weiteren, hier schematisch dargestellten Bestandteile der Komponente 39 wird auf die Druckschriften DE 103 14 643 B4 und DE 103 33 610 B4 verwiesen, deren Offenbarung zum Gegenstand der vorliegenden Patentanmeldung gemacht wird. Neben der Ansteuerung der Komponente 39 und des Anhängersteuerventils 40 durch die Steuereinheit 38 durch die elektrischen Steuerleitungen können diese Steuerleitungen auch zur Übertragung von Signalen über Betriebszustände der Komponente 39 und des Anhängersteuerventils zu der Steuereinheit 38 dienen, die dann von der Steuereinheit 38 verarbeitet werden können und wiederum zur Ansteuerung oder Regelung der Komponente 39 und/oder des Anhängersteuerventils 40 verwendet werden können. In Fig. 5 ist darüber hinaus zu erkennen, dass die Steuereinheit über eine elektrische Leistungsquelle 54 mit elektrischer Leistung versorgt wird. Hierbei kann es sich auch um mindestens eine der Batterien 32, 33 handeln, die unmittelbar oder unter Zwischenschaltung einer weiteren Steuereinheit, wie insbesondere einer Steuereinheit 23, 24, die Steuereinheit 38 versorgen kann.

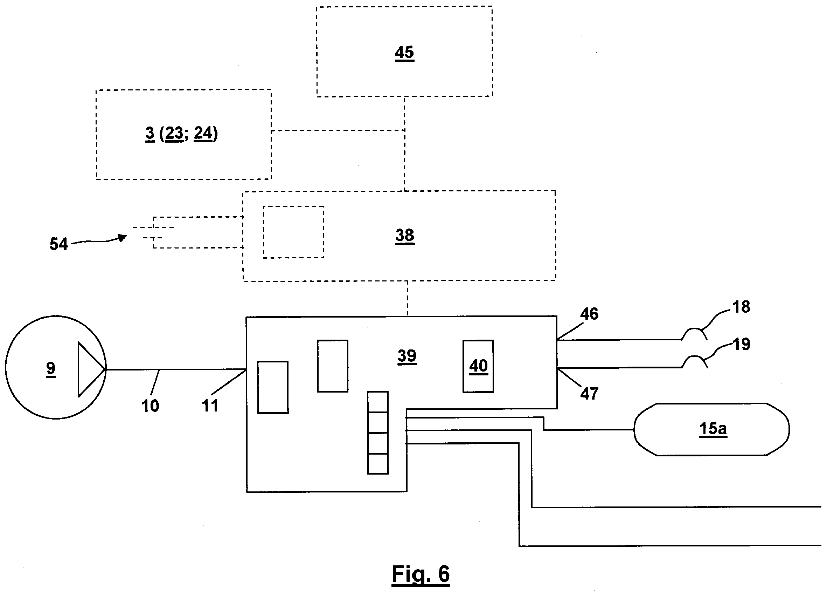

Für das in **Fig. 6** dargestellte Ausführungsbeispiel sind die Komponente 39 und das Anhängersteuerventil 40 als eine integrale Baueinheit ausgebildet, deren Ausgangsanschlüsse 46, 47 unmittelbar mit den Kupplungsköpfen 18, 19 verbunden sind.

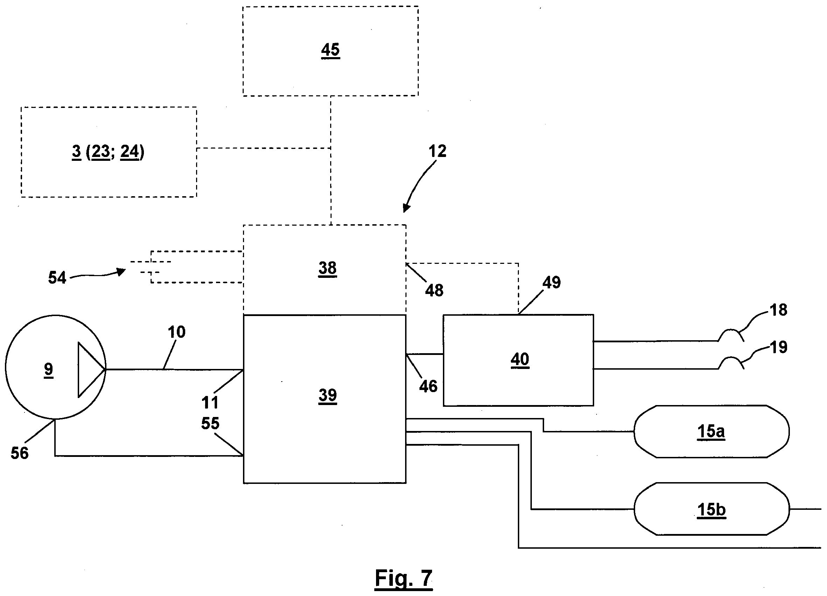

Wie aus **Fig. 7** ersichtlich ist, kann über die Baueinheit, welche mit der Steuereinheit 38 und der Komponente 39 gebildet ist, auch eine Steuerung des Kompressors 9 erfolgen. Für das dargestellte Ausführungsbeispiel besitzt die Komponente 39 einen pneumatischen Ausgangsanschluss 55, welcher über eine Leitung mit einem pneumatischen Steueranschluss 56 des Kompressors 9 verbunden ist. Der Druck an dem Ausgangsanschluss 55 kann durch die Steuereinheit 38 durch geeignete Ansteuerung von Magnetventilen, elektropneumatischen Baueinheiten oder elektropneumatischen Vorsteuerventilen geeignet beeinflusst werden.

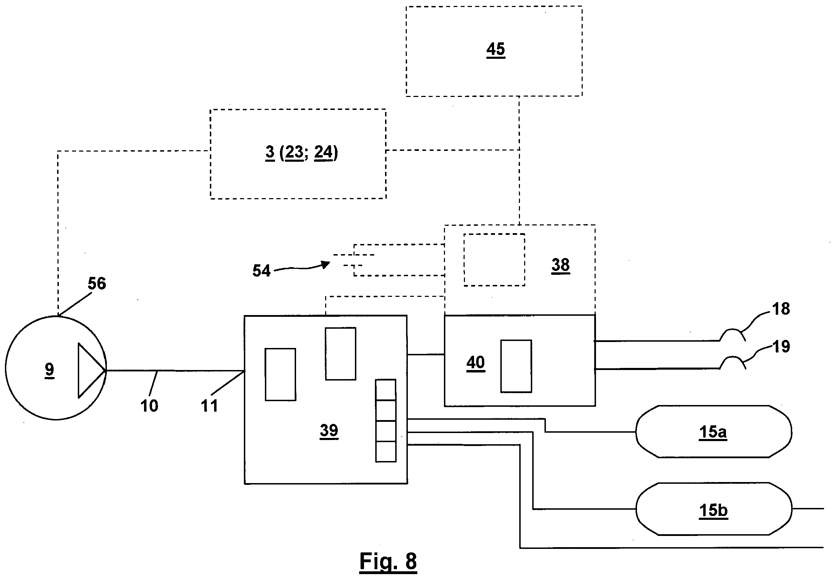

Während gemäß Fig. 7 die Ansteuerung des Kompressors 9 pneumatisch ausgebildet ist, zeigt das in **Fig. 8** dargestellte Ausführungsbeispiel eine Ansteuerung des Kompressors 9 über einen elektrischen Steueranschluss 56 desselben. Hierbei wird das dem Steueranschluss 56 zugeführte Steuersignal von dem elektromechanischen Bremssystem 3 bzw. der Steuereinheit 23 und/oder der Steuereinheit 24, vorzugsweise auf redundante Weise, erzeugt.

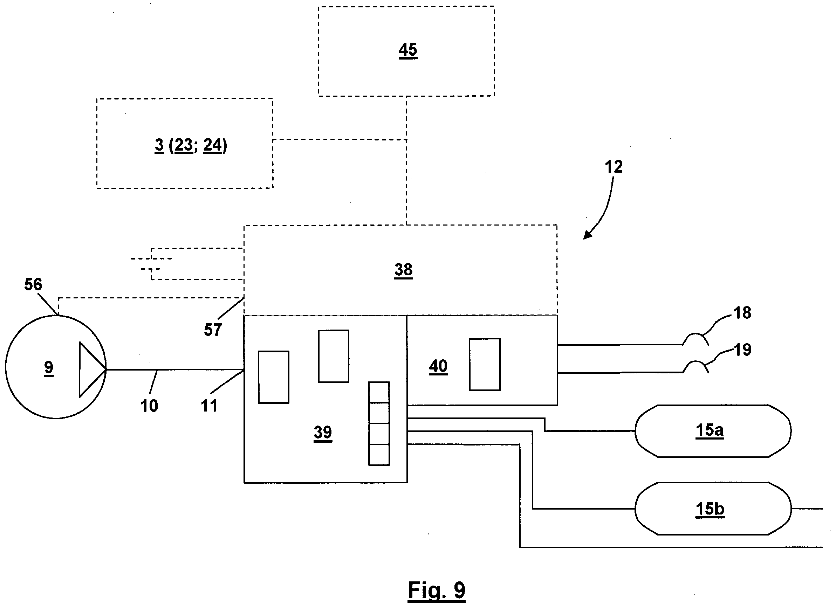

Hingegen besitzt für das Ausführungsbeispiel gemäß **Fig. 9** die Steuereinheit 38 einen Ausgangsanschluss 57, über welchen dem elektrischen Steueranschluss 56 des Kompressors ein elektrisches Steuersignal zugeführt werden kann.

Beispielsweise kann gemäß Fig. 8 und 9 eine elektrische Ansteuerung einer elektrisch betätigten Kupplung erfolgen, die in die Antriebsverbindung zu dem Kompressor zwischengeschaltet ist. Für eine andere Ausgestaltung ist es möglich, dass über den elektrischen Steueranschluss 56 ein elektrisch angetriebener Kompressor, bspw. für ein Hybridfahrzeug, angesteuert wird.

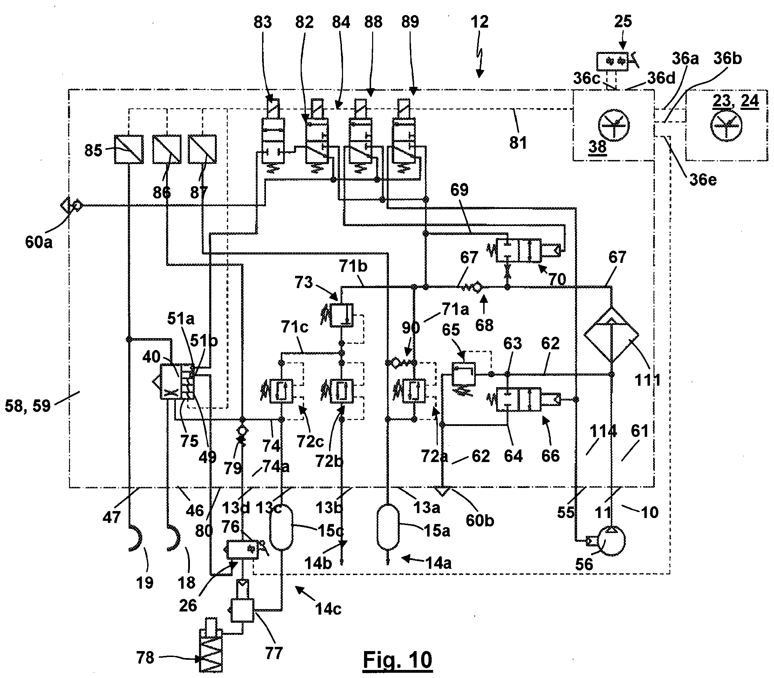

In den **Fig. 10 bis Fig. 18** werden für hinsichtlich Ihrer Ausgestaltung, Funktion und/oder Integration vergleichbare Bauelemente teilweise dieselben Bezugszeichen verwendet.

In **Fig. 10** ist die Luftaufbereitungseinrichtung 12 mit einem gemeinsamen Gehäuse 58 oder als singuläre Baueinheit 59 ausgebildet. Die Druckluftaufbereitungseinrichtung 12 verfügt über eine integrierte Steuereinheit 38. Diese ist über mindestens einen Eingangsanschluss, hier redundante Eingangsanschlüsse 36a, 36b mit einer Steuereinheit des Bremssystems 3, hier den beiden Steuereinheiten 23, 24, verbunden. Über die Eingangsanschlüsse 36a, 36b werden der Steuereinheit 38 (neben einem möglichen weiteren uni- oder bidirektionalen Austausch von Signalen oder Daten) Zugfahrzeug-Bremssignale 5, 6 von mindestens einer der Steuereinheiten 23, 24 zugeführt.

Darüber hinaus besitzt die Druckluftaufbereitungseinrichtung 12 bzw. die Steuereinheit 38 Eingangsanschlüsse 36c, 36d, über welche der Steuereinheit 38 ein Betätigungssignal eines Betätigungsorgans 25, hier eines Bremspedals, zugeführt werden kann. Über einen weiteren Eingangsanschluss 36e wird der Druckluftaufbereitungseinrichtung 12 bzw. der Steuereinheit 38 ein elektrisches Signal entsprechend der Betätigung eines Betätigungsorgans 26, hier für eine Feststellbremse, zugeführt.

Die Druckluftaufbereitungseinrichtung 12 verfügt über Entlüftungsanschlüsse 60a, 60b. Weiterhin verfügt die Druckluftaufbereitungseinrichtung 12 über einen Versorgungsanschluss 11, welcher über die Versorgungsleitung 10 mit dem Kompressor 9 gekoppelt ist. Die Steuerung des Kompressors 9 erfolgt hier über einen pneumatischen Steueranschluss 56, welcher mit einem pneumatischen Ausgangsanschluss 55 der Druckluftaufbereitungseinrichtung 12 gekoppelt ist.

Die Druckluftaufbereitungseinrichtung 12 verfügt über einen Ausgangsanschluss 13a, der mit einem Behälter 15a eines Luftfederkreises 14a verbunden ist, einen Ausgangsanschluss 13b für einen Nebenverbraucherkreis 14b und Ausgangsanschlüsse 46 und 47 zu den Kupplungsköpfen 18, 19.

In der Druckluftaufbereitungseinrichtung 12 ist der Versorgungsanschluss 11 über eine Eingangsleitung 61 mit einem Lufttrockner 111 verbunden. Vor dem Trockner 62 zweigt von der Eingangsleitung 61 eine Entlüftungsleitung 62 ab, welche mit dem Entlüftungsanschluss 60b verbunden ist. Die Entlüftungsleitung 62 besitzt parallele Leitungszweige 63, 64. In dem Leitungszweig 63 ist ein Sicherheitsventil 65 angeordnet, welches während einer Lastphase den Druck in der Eingangsleitung 61 begrenzt. In dem anderen Leitungszweig 64 ist ein Druckregler 66 angeordnet. Der Druckregler 66 ist als 2/2-Wegeventil mit einer infolge der Beaufschlagung durch eine Feder eingenommenen Sperrstellung sowie einer mit einem pneumatischen Steuerdruck herbeiführbaren Durchlassstellung ausgebildet. Eine Ansteuerung des Druckreglers 66 erfolgt über eine Steuerleitung 114, die gleichzeitig über den Ausgangsanschluss 55 den Steueranschluss 56 des Kompressors 9 ansteuert. Im Lastbetrieb ausgangsseitig des Lufttrockners 111 befindet sich eine Zentralleitung 67 mit einem bei der Druckluftförderung im Lastbetrieb öffnenden Rückschlagventil 68, welches eine Rückströmung von Druckluft aus der Zentralleitung 67 durch den Lufttrockner 111 in die Eingangsleitung 61 unterbindet. Das Rückschlagventil 68 ist durch eine Bypassleitung 69 umgangen, in welcher ein hier pneumatisch angesteuertes Regenerationsventil 70 angeordnet ist. Für das dargestellte Ausführungsbeispiel ist das Regenerationsventil 70 als 2/2-Wegeventil, vorzugsweise mit vor-oder nachgeschalteter oder integrierter Drossel, ausgebildet mit einer durch eine Feder herbeigeführten Sperrstellung sowie einer mittels eines pneumatischen Steuerdrucks herbeiführbaren Durchlassstellung. In der Durchlassstellung des Regenerationsventils 70 kann Druckluft unter Umgehung des Rückschlagventils 68 umgekehrt zur Lastphase in einer Regenerationsphase den Lufttrockner 111 in umgekehrter Richtung durchströmen und über die Entlüftungsleitung 62 und den Druckregler 66 über den Entlüftungsanschluss 60b entlüftet werden. Stromabwärts des Rückschlagventils 68 verzweigt die Zentralleitung 67 zu Leitungszweigen 71a, 71b, ..., welche unter Zwischenschaltung von pneumatischen oder elektropneumatischen Bauelementen mit Ausgangsanschlüssen 13a, 13b, ... für die einzelnen Verbraucherkreise 14a, 14b, ... verbünden sind. Der Leitungszweig 71a verfügt über ein Überströmventil 72a (mit oder ohne begrenzte Rückströmung) über welche die Druckluft zu dem Ausgangsanschluss 13a und dem Verbraucherkreis 14a gelangen kann. In dem Leitungszweig 71b sind ein Druckbegrenzungsventil 73 sowie ein Überströmventil 72b zwischen die Zentralleitung 67 und den Ausgangsanschluss 13b zwischengeschaltet. Das Druckbegrenzungsventil 73 dient der Druckbegrenzung sowohl in dem Verbraucherkreis 14b als auch in dem Verbraucherkreis 14c, indem der Leitungszweig 71c zwischen dem Druckbegrenzungsventil 73 und dem Überströmventil 72b abzweigt. In dem Leitungszweig 71c ist dem Ausgangsanschluss 13c ein Überströmventil 72c vorgeordnet. Von der Leitung zwischen dem Überströmventil 72c und dem Ausgangsanschluss 13c zweigt eine Versorgungsleitung 74 ab, welche mit einem Versorgungsanschluss 75 des in die Druckluftaufbereitungseinrichtung 12 integrierten Anhängersteuerventils 40 verbunden ist. Ein von der Versorgungsleitung 74 abzweigender Leitungszweig 74a ist über einen Ausgangsanschluss 13d mit einem Versorgungsanschluss 76 des Betätigungsorgans 26 verbunden. In dem Leitungszweig der Versorgungsleitung 74a ist vorzugsweise ein Rückschlagventil 79 angeordnet. Je nach manueller Betätigung des Betätigungsorgans 26 durch den Fahrer kann das Betätigungsorgan 26 einen Steueranschluss eines Relaisventils 77 be- und entlüften. Der derart gesteuerte Ausgangsdruck des Relaisventils 77 kann zum Lösen und Betätigen einer Federspeicher-Feststellbremse 78 genutzt werden. Das Relaisventil 77 wird über den Ausgangsanschluss 13c und einen Behälter 15c in dem Verbraucherkreis 14c mit Druckluft versorgt.

Das Anhängersteuerventil 40 besitzt gemäß Fig. 10 (zumindest) zwei pneumatische Steueranschlüsse 51a, 51b. Der Steueranschluss 51b des Anhängersteuerventils 40 ist über einen Steueranschluss 80 der Druckluftaufbereitungseinrichtung 12 mit einem Ausgangsanschluss des Betätigungsorgans 26 verbunden, dessen Druck von der manuellen Betätigung des Betätigungsorgans 26 abhängig ist. Somit kann mit Betätigung des Betätigungsorgans 26 durch den Fahrer auch ein Steuerdruck über den Steueranschluss 80 an den Steueranschluss 51b des Anhängersteuerventils 40 übergeben werden, welches dann an dem Ausgangsanschluss 47 und damit dem Kupplungskopf Bremse 19 einen geeigneten Bremssteuerdruck für den Anhänger in Abhängigkeit von der Betätigung des Betätigungsorgans 26 erzeugen kann. Weiterhin kann das Anhängersteuerventil 40 pneumatisch über den pneumatischen Steueranschluss 51a angesteuert werden. Hierzu ist der pneumatische Steueranschluss 51a über eine von der Steuereinheit 38 über eine elektrische Steuerleitung 81 angesteuerte elektropneumatische Ventilbaugruppe 82 mit der Zentralleitung 76 ausgangsseitig des Rückschlagventils 68 verbunden. Für das dargestellte Ausführungsbeispiel ist die Ventilbaugruppe 82 mit der Kombination eines 2/2-Magnetventils 83 mit diesem vorgeordneten 3/2-Magnetventil 84 ausgebildet. Befindet sich das 2/2-Magnetventil 83 entsprechend dem Steuersignal der Steuereinheit 38 auf der Steuerleitung 81 in seiner Sperrstellung, wird der Druck an dem Steueranschluss 51a konstant gehalten. Mit Überführung des 2/2-Magnetventils 83 in seine Durchlassstellung entgegen der Beaufschlagung durch die Feder kann der Steueranschluss 51a je nach Überführung des 3/2-Magnetventils 84 in seine Belüftungs- oder Entlüftungsstellung von der Zentralleitung 67 belüftet oder über den Entlüftungsanschluss 60a entlüftet werden. Somit kann über die Steuereinheit 38 letztendlich über ein elektrisches Steuersignal der Steuereinheit 38 der Druck an dem Ausgangsanschluss 47 und dem Kupplungskopf Bremse 19 gesteuert werden.

Darüber hinaus verfügt das Anhängersteuerventil 40 über (mindestens) einen elektrischen Steueranschluss 49, über welchen das Anhängersteuerventil 40 unmittelbar mittels eines elektrischen Steuersignals von der Steuereinheit 38 angesteuert werden kann.

Über einen Drucksensor 85 kann der Druck an dem Ausgangsanschluss 47, und damit am Kupplungskopf Bremse 19 sowie der Bremsdruck des Anhängers, sensiert werden. Das Ausgangssignal des Drucksensors 85 wird der Steuereinheit 38 zugeführt, welche dann den gemessenen Druck regeln kann, indem die Steuersignale für die Ventilbaugruppe 82 oder für den elektrischen Steueranschluss 49 entsprechend geregelt werden. Ein Drucksensor 86 erfasst den Druck in der Versorgungsleitung 74, welcher mit dem Druck in dem Verbraucherkreis 14c korreliert. Ein weiterer Drucksensor 87 erfasst den Druck an dem Ausgangsanschluss 13a bzw. dem Verbraucherkreis 14a. Die Ausgangssignale der Drucksensoren 86, 87 werden ebenfalls der Steuereinheit 38 zugeführt.

In Fig. 10 erfolgt die Übertragung der elektrischen Messsignale sowie der Steuersignale über eine gemeinsame Leitung 81, welche hier bidirektional ausgebildet ist einerseits als Steuerleitung zur Übertragung der Steuersignale und andererseits zwecks Überführung der Messsignale der Sensoren 85-87 zu der Steuereinheit 38. Es versteht sich, dass hier beliebige Leitungen, ein CAN-Bus und auch einzelne elektrische Leitungsverbindungen zu den einzelnen elektrischen oder elektropneumatischen Komponenten Einsatz finden können.

Über die Steuereinheit 38 wird auch ein Steuerventil 88, hier in Ausbildung als 3/2-Magnetventil mit einer Belüftungsstellung sowie einer Entlüftungsstellung, angesteuert. In der Belüftungsstellung wird der Steueranschluss des Regenerationsventils 70 mit der Zentralleitung 67 verbunden, sodass dieses in seine Durchlassstellung geschaltet wird, während in der Entlüftungsstellung des Steuerventils 88 der Steueranschluss des Regenerationsventils 70 mit der Entlüftung 60a verbunden wird, sodass die Sperrstellung des Regenerationsventils 70 eingenommen ist.

Weiterhin steuert die Steuereinheit 38 ein Steuerventil 89, hier ebenfalls in Ausbildung als 3/2-Magnetventil mit einer Belüftungsstellung und einer Entlüftungsstellung, an. Über das Steuerventil 89 wird in der Belüftungsstellung die Zentralleitung 67 mit der Steuerleitung 114, also mit einem Steueranschluss des Druckreglers 66 und einem Steueranschluss 56 des Kompressors 9, verbunden, wären in der Entlüftungsstellung des Steuerventils 89 die Steuerleitung 114 mit dem Entlüftungsanschluss 60a verbunden wird.

Als eine Besonderheit ist gemäß Fig. 10 das Überströmventil 72a über eine Bypassleitung mit einem Rückschlagventil 90 überbrückt, welches für eine Strömung von Druckluft von dem Ausgangsanschluss 13a an dem Überströmventil 72a vorbei öffnet. Demgemäß kann Druckluft aus dem Behälter 15a auch zur Versorgung der Verbraucherkreise 14b, 14c und für die Versorgung des Anhängersteuerventils 40 genutzt werden, wenn sich das Überströmventil 72a in einer Schließstellung befindet.

Die vielfältigen Betriebsmöglichkeiten der Nutzfahrzeug-Betriebsanlage 1 und der Druckluftaufbereitungseinrichtung 12 gemäß Fig. 10 sind dem Fachmann bereits aus dem Funktionsschaltbild gemäß Fig. 10 und der vorangegangenen Beschreibung ersichtlich. Lediglich ausgewählte Funktionen und Betriebsweisen werden im Folgenden beschrieben:
- Der Fahrer kann über das Betätigungsorgan 25, insbesondere das Bremspedal, einen Bremswunsch vorgeben, welcher der Druckluftaufbereitungseinrichtung 12 bzw. der Steuereinheit 38 über die Eingangsanschlüsse 36c, 36d als Zugfahrzeug-Bremssignal zugeführt wird. Dieser Bremswunsch wird von der Steuereinheit 38 weitergegeben an das Bremssystem 3, nämlich die Steuereinheit 23 und/oder die Steuereinheit 24, sodass eine mit dem Bremswunsch korrelierende Bremskraft unter Beaufschlagung der Bremsaktuatoren 20 an dem Zugfahrzeug erzeugt werden kann. Parallel steuert die Steuereinheit 38 den Bremsdruck an dem Ausgangsanschluss 47und damit den Druck an dem Kupplungskopf Bremse 19, um an dem Anhänger eine mit dem Bremswunsch des Fahrers und der Beaufschlagung der elektromechanischen Bremsaktuatoren 20 korrelierende Bremskraft zu erzeugen. Dies kann auf unterschiedliche Wege erfolgen. Zunächst kann die Steuereinheit 38 die Ventilbaugruppe 82 ansteuern, um einen geeigneten pneumatischen Steuerdruck an dem Steueranschluss 51a des Anhängersteuerventils 40 zu erzeugen, nach Maßgabe dessen dann der Druck an dem Ausgangsanschluss 47 beeinflusst wird. Eine Regelung kann ggf. durch Rückführung des Signals des Sensors 85 erfolgen. Alternativ kann eine elektrische Steuerung erfolgen, indem ein Steuersignal der Steuereinheit 38 dem elektrischen Steueranschluss 49 zugeführt wird mit hierdurch hervorgerufener elektropneumatischer Steuerung des Drucks an dem Ausgangsanschluss 47. Auch in diesem Fall kann eine Regelung durch Rückführung des Messsignals des Drucksensors 85 erfolgen.
- Möglich ist, dass der Fahrer einen Wunsch über das Betätigungsorgan 26, insbesondere einen Feststellbremshebel, vorgibt. Dieser wird über den Eingangsanschluss 36e an die Druckluftaufbereitungseinrichtung 12 bzw. die Steuereinheit 38 übertragen. Ein Wunsch nach einer Feststellbremswirkung kann von der Steuereinheit 38 an das Bremssystem 3, insbesondere die Steuereinheit 23 und/oder die Steuereinheit 24 übertragen werden, sodass eine elektromechanische Bremswirkung herbeigeführt werden kann. Dies ist allerdings nicht zwingend erforderlich -vielmehr kann unmittelbar eine Feststellbremswirkung an dem Zugfahrzeug mittels der pneumatischen Beaufschlagung des Steueranschlusses des Relaisventils 77 durch das Betätigungsorgan 26 erfolgen mit entsprechender Beaufschlagung der Federspeicher-Feststellbremse 78. Eine mit der Betätigung des Betätigungsorgans 26 korrelierende Bremswirkung des Anhängers kann dann auf zwei unterschiedliche Weisen herbeigeführt werden: Einerseits kann über die Übermittlung der Betätigung des Betätigungsorgans 26 über den Eingangsanschluss 36e die Steuereinheit 38 über den elektrischen Steueranschluss 49 auf elektrischem Wege oder über die elektrische Ansteuerung der Ventilbaugruppe 82 auf elektropneumatischem Wege mittels des pneumatischen Steueranschlusses 51a den Druck an dem Ausgangsanschluss 47 beeinflussen und damit eine Bremswirkung an dem Anhänger erzeugen. Zusätzlich hängt aber die pneumatische Beaufschlagung des Steueranschlusses 51b des Anhängersteuerventils 40 ab von der Betätigung des Betätigungsorgans 28, indem ein entsprechender Druck über den Steueranschluss 80 der Luftaufbereitungseinrichtung 12 und damit dem Steueranschluss 51b zugeführt wird.
- Auf einfache Weise kann auch eine Prüffunktion und/oder eine Streckbremsfunktion gewährleistet werden. Für die Streckbremsfunktion steuert die Steuereinheit 38 (auf elektrischem oder elektropneumatischem Weg) das Anhängersteuerventil 40 derart an, dass an dem Ausgangsanschluss 47 ein Bremssteuerdruck erzeugt wird, welcher zu einer Bremskraft des Anhängers führt, die größer ist als eine Bremskraft des elektromechanischen Bremssystems 3. Für die Gewährleistung einer Prüffunktion wird seitens der Steuereinheit 38 (auf elektrischem oder elektropneumatischem Weg) der maximale Bremsdruck an dem Ausgangsanschluss 47 erzeugt, um zu prüfen, ob der Kraftfahrzeugzug alleinig über die Feststellbremsen des Zugfahrzeugs gehalten werden kann. Gegebenenfalls wird der Druckluftaufbereitungseinrichtung 12 oder der Steuereinheit 38 über eine Eingangsanschluss ein Signal übermittelt, dass eine Streckbremsfunktion und/oder eine Prüffunktion gewünscht ist.

Wenn, wie zuvor erläutert, alternative Wege zur Ansteuerung des Anhängersteuerventils 40 gegeben sind, ist eine redundante Betätigung der Bremsen des Anhängers gewährleistet, was die Betriebssicherheit erhöhen kann. Möglich ist, dass hierbei eine der Ansteuerungsmöglichkeiten, insbesondere die elektrische Ansteuerung einen Vorrang besitzt gegenüber der anderen Ansteuerung, die dann als "Fall-Back-Lösung" genutzt wird bei Versagen der ersten Ansteuerungsmöglichkeit. Möglich ist aber auch die kumulative überlagerte Nutzung der unterschiedlichen Ansteuerungsmöglichkeiten, beispielsweise mit einer grundsätzlich pneumatischen Ansteuerung, aber ergänzender elektrischer Ansteuerung zur Beeinflussung eines Ansprechverhaltens oder zur Erweiterung der Steuerungsmöglichkeiten.

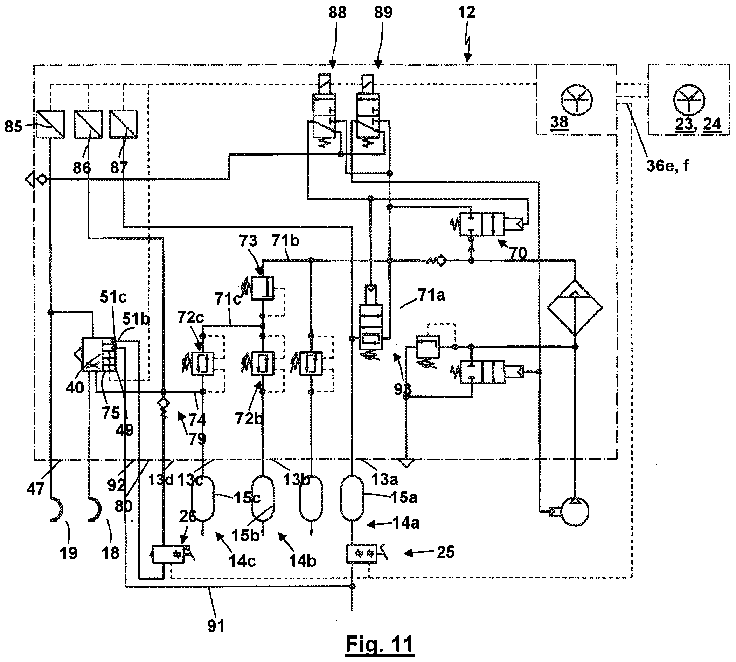

In **Fig. 11** ist eine Nutzfahrzeug-Betriebsanlage und eine Druckluftaufbereitungseinrichtung 12 dargestellt, welche für ein hybrides Bremssystem genutzt werden kann. Hier ist ein Verbraucherkreis 14a als Betriebsbremskreis ausgebildet, in dem pneumatische Betriebsbremsen, beispielsweise einer Achse, über das Betätigungsorgan 25, hier ein Bremspedal, mit einem Behälter 15a verbunden sind. Gleichzeitig wird von dem Betätigungsorgan 25 entsprechend dem Bremswunsch des Fahrers ein elektrisches Ausgangssignal erzeugt, welches einem Eingangsanschluss 36f der Druckluftaufbereitungseinrichtung 12 oder der Steuereinheit 38 zugeführt wird. Dieses Zugfahrzeug-Bremssignal kann dann von der Steuereinheit 38 an das elektromechanische Bremssystem 3, hier die Steuereinheiten 23, 24 übermittelt werden, wobei das Zugfahrzeug-Bremssignal lediglich durchgeleitet werden kann oder eine entsprechende Anpassung durch die Steuereinheit 38 oder einer Aufbereitung des Signals durch die Steuereinheit 38 erfolgen kann. Entsprechend dem derart übermittelten Bremswunsch steuern dann die Steuereinheiten 23, 24 das elektromechanische Bremssystem mit den elektromechanischen Bremsaktuatoren 20 an. Der Bremsdruck ausgangsseitig des Betätigungsorgans 25, welcher den pneumatischen Betriebsbremsen zugeführt wird, wird über eine Steuerleitung 91 und einen Steueranschluss 92 der Druckluftaufbereitungseinrichtung 12 einem pneumatischen Steueranschluss 51c des Anhängersteuerventils 40 zugeführt, sodass das Anhängersteuerventil 40 entsprechend der Beaufschlagung des Betätigungsorgans 25 einen Druck an dem Ausgangsanschluss 47 und damit dem Kupplungskopf Bremse 19 aussteuern kann. Es versteht sich, dass neben dieser rein pneumatischen Steuerung der Bremsung des Anhängers alternativ die Steuereinheit 38 angesichts des in dieser vorliegenden Wunsches des Fahrers nach Abbremsung (auch) auf elektrischem Weg über den elektrischen Steueranschluss 49 das Anhängersteuerventil 40 elektrisch und/oder auf anderem Weg elektropneumatisch ansteuern kann.

In dem Leitungszweig 71a zur Speisung des Verbraucherkreises 14a für die Betriebsbremse ist für das in Fig. 11 dargestellte Ausführungsbeispiel ein Überströmventil 93 eingesetzt, welches durch pneumatische Beaufschlagung eines Steueranschlusses in eine Durchlassstellung überführt werden kann, in der der Behälter 15a zur Querspeisung paralleler Verbraucherkreise 14b, 14c genutzt werden kann. In diesem Fall ist das Steuerventil 88 nicht nur zur Ansteuerung des Regenerationsventils 70 genutzt. Vielmehr ist das Steuerventil 88 multifunktional eingesetzt, da die ausgangsseitige Steuerleitung des Steuerventils 88 auch mit dem Steueranschluss des Überströmventils 93 verbunden ist. Die Leitungszweige 71b und 71c mit dem Druckbegrenzungsventil 73 und den Überströmventilen 72b, 72c, die Versorgungsleitung 74 sowie die Speisung des Ausgangsanschlusses 13d gemäß Fig. 11 sind im Wesentlichen entsprechend Fig. 10 ausgebildet, wobei in Fig. 11 auch der Verbraucherkreis 14b mit einem Behälter 15b ausgestattet ist.

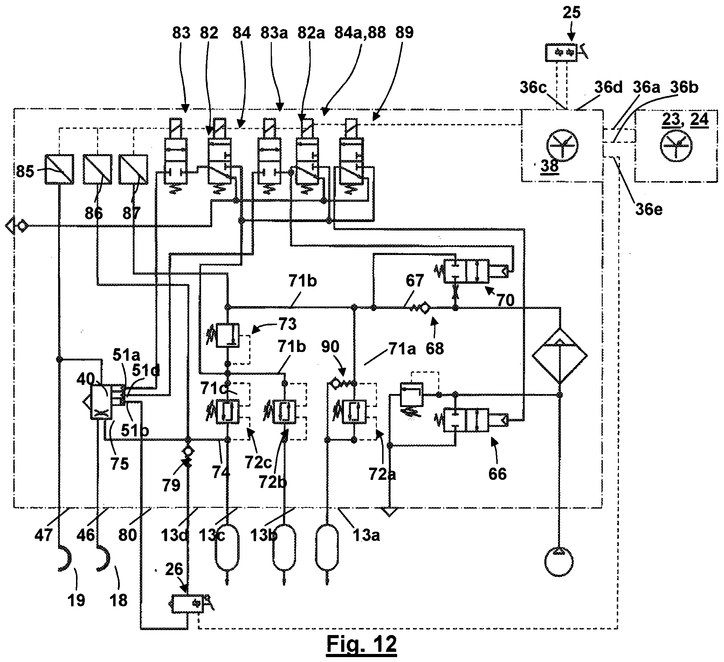

Für das Ausführungsbeispiel gemäß **Fig. 12** erfasst der Drucksensor 87 abweichend zu den Fig. 10 und 11 den Druck in der Zentralleitung 67 stromabwärts des Rückschlagventils 68. Die Leitungszweige 71a, 71b, 71c und die Verbindung der Versorgungsleitung 74 mit dem Versorgungsanschluss 75 des Anhängersteuerventils 40 sind im Wesentlichen entsprechend Fig. 10 ausgebildet. Allerdings ist für das in Fig. 12 dargestellte Ausführungsbeispiel das Anhängersteuerventil 40 rein pneumatisch angesteuert. Über den Steueranschluss 51b kann das Anhängersteuerventil 40 entsprechend der in Fig. 10 dargestellten und hierzu beschriebenen Ausführungsform entsprechend der Betätigung des Betätigungsorgans 26 angesteuert werden. Über den pneumatischen Steueranschluss 51a kann weiterhin das Anhängersteuerventil 40 über die elektrische Ansteuerung der Ventilbaugruppe 82 angesteuert werden, vgl. Fig. 10. Allerdings verfügt das Anhängersteuerventil 40 über einen redundanten, weiteren pneumatischen Steueranschluss 51d, welcher unabhängig von der Ventilbaugruppe 82 über eine redundante Ventilbaugruppe 82a mit einer Kombination eines 2/2-Magnetventils 83a mit einem 3/2-Magnetventil 84a angesteuert werden kann. Als Besonderheit ist als 3/2-Magnetventil 84a in der Ventilbaugruppe 82a das Steuerventil 88 eingesetzt, sodass das 3/2-Magnetventil 84a multifunktional ist und einerseits die Be- und Entlüftung des Steueranschlusses 51d gewährleistet und andererseits die Be- und Entlüftung des Steueranschlusses des Regenerationsventils 70 gewährleistet. Für das Ausführungsbeispiel gemäß Fig. 12 ist das Steuerventil 89 lediglich für die Ansteuerung des Druckreglers 66 verantwortlich, nicht für die pneumatische Ansteuerung des Kompressors 9.

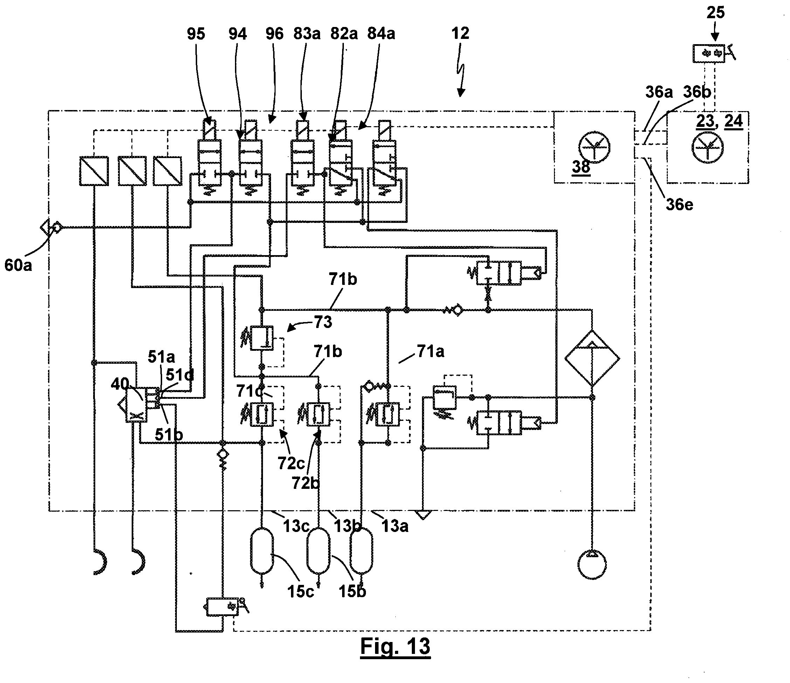

Für das in **Fig. 13** dargestellte Ausführungsbeispiel wird das elektrische Ausgangssignal des Betätigungsorgans 25, hier des Bremspedals, den Steuereinheiten 23, 24 des elektromechanischen Bremssystems 3 zugeführt. Dieses Bremssignal des Betätigungsorgans 25 wird unverändert oder unter Modifikation durch die Steuereinheit 23, 24 von der Steuereinheit 23, 24 über die Eingangsanschlüsse 36a, 36b als Zugfahrzeug-Bremssignal übertragen an die Druckluftaufbereitungseinrichtung 12 bzw. die Steuereinheit 38. Die Steuereinheit 38 ermittelt dann geeignete Steuersignale zur rein elektrischen oder elektropneumatischen Ansteuerung des Anhängersteuerventils 40. In Fig. 13 erfolgt die Ansteuerung des Anhängersteuerventils 40 elektropneumatisch, wobei die Ansteuerung der Steueranschlüsse 51b und 51d der Ansteuerung gemäß Fig. 12 entspricht. Hingegen wird der pneumatische Steueranschluss 51a abweichend zu Fig. 12 über eine Ventilbaugruppe 94 gesteuert, welche mit zwei 2/2-Magnetventilen 95, 96 gebildet ist. In der nicht elektrisch angesteuerten, durch die Feder herbeigeführten und in Fig. 13 wirksamen Sperrstellung der 2/2-Magnetventile 95, 96 wird der Druck an dem Steueranschluss 51a konstant gehalten, während mit elektrischer Ansteuerung des 2/2-Magnetventils 95 dieses in seine Durchlassstellung geschaltet werden kann, in welcher der Steueranschluss 51a mit dem Entlüftungsanschluss 60a verbunden wird. Hingegen wird der Steueranschluss 51a bei elektrischer Ansteuerung des 2/2-Magnetventils 96 mit dem Leitungszweig 71b oder 71c stromabwärts des Druckbegrenzungsventils 73 und stromaufwärts der Überströmventile 72b, 72c verbunden, was zur Folge hat, dass eine über die Überströmventile 72b, 72c begrenzte Rückströmung aus einem Behälter 15b, 15c erfolgen kann, die mit einer Erhöhung des Steuerdrucks an dem Steueranschluss 51a einhergeht. Die gemeinsame Versorgungsleitung für die Ventileinheiten 82a, 94 zweigt hier nach dem Druck-begrenzungsventil 73 ab.

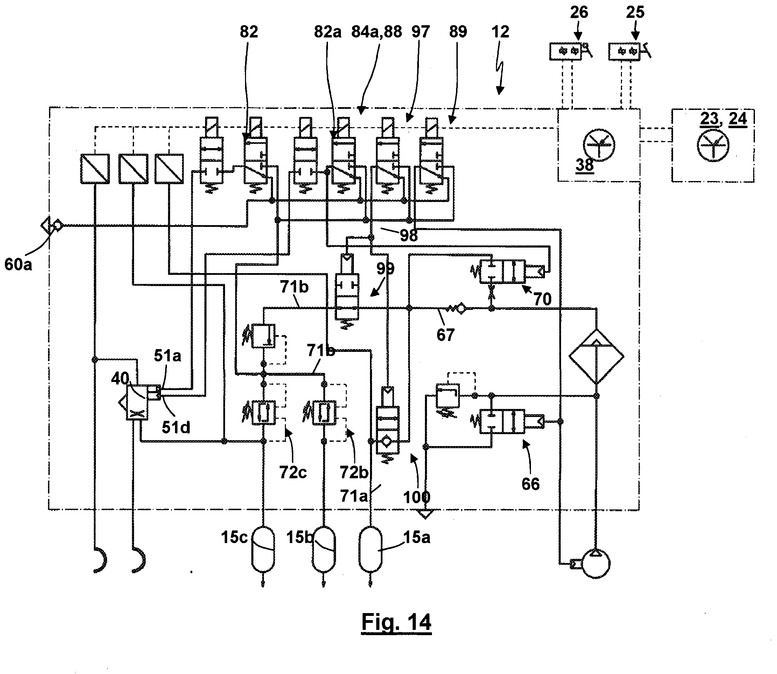

Für das in **Fig. 14** dargestellte Ausführungsbeispiel werden die elektrischen Ausgangssignale der Betätigungsorgane 25, 26 der Druckluftaufbereitungseinrichtung 12 bzw. der Steuereinheit 38 als Zugfahrzeug-Bremssignale zugeführt. Die Steuereinheit 38 übermittelt über geeignete Ausgangsanschlüsse diese Zugfahrzeug-Bremssignale unverändert oder verändert an das elektromechanische Bremssystem 3, hier die Steuereinheiten 23, 24. Die Ansteuerung des pneumatischen Steueranschlusses 51a des Anhängersteuerventils 40 entspricht hier der Ansteuerung gemäß Fig. 12 mit der elektrischen Ansteuerung der Ventilbaugruppe 82. Auch der Steueranschluss 51d wird entsprechend Fig. 12 über eine Ventilbaugruppe 82a angesteuert, sodass eine redundante pneumatische Ansteuerung des Anhängersteuerventils 40 durch die Steuereinheit 38 möglich ist. Dazu kann bspw. bei Ausfall der Ventilbaugruppe 82a oder des Magnetventils 84a über die entlüftende Ansteuerung der Ventilbaugruppe 82 ein gleichwertiges oder abweichendes Bremssignal für die Anhängerbremse erzeugt werden. Das Steuerventil 89 ist für diese Ausführungsform verantwortlich sowohl für die Ansteuerung des Regenerationsventils 70 als auch des Druckreglers 66, wobei in der Belüftungsstellung das Steuerventil 89 Druckluft aus den Leitungszweigen 71b, 71c bzw. einem Behälter 15b, 15c erhält. Gemäß Fig. 14 besitzt das Anhängersteuerventil 40 lediglich die pneumatischen Steueranschlüsse 51a, 51d, sodass über die Ventilbaugruppen 82, 82a eine redundante elektropneumatische Ansteuerungsmöglichkeit über die Steuereinheit 38 gegeben ist. Die unmittelbare pneumatische Ansteuerung des Anhängersteuerventils 40 über das Betätigungsorgan 26 ist in diesem Fall entfallen. Zusätzlich vorgesehen ist gemäß Fig. 14 ein Steuerventil 97. Dieses Steuerventil 97 ist als 3/2-Magnetventil ausgebildet und verbindet eine Steuerleitung 98 in einer federbeaufschlagt herbeigeführten Entlüftungsstellung mit dem Entlüftungsanschluss 60a. Hingegen verbindet das Steuerventil 97 die Steuerleitung in einer Belüftungsstellung mit einem Leitungszweig 71b, 71c, sodass mit durch die Überströmventile 72b, 72c begrenzter Rückströmung eine Druckbeaufschlagung durch die Behälter 15b, 15c möglich ist. Die Steuerleitung 98 ist mit einem Steueranschluss eines Sperrventils 99 in Ausbildung als 2/2-Wegeventil verbunden, über welche mit pneumatischer Beaufschlagung der Steuerleitung 98 die Zentralleitung 67 mit den Leitungszweigen 71b, 71c verbunden wird, während ohne pneumatische Beaufschlagung der Steuerleitung 98 die genannte Verbindung gesperrt ist. Gleichzeitig steuert die Steuerleitung 98 über einen Leitungszweig ein Steuerventil 100 an, welches ohne pneumatische Beaufschlagung des Steueranschlusses den Leitungszweig 71a mit der Zentralleitung 67 über ein integriertes Rückschlagventil verbindet, sodass der Druck in einem Behälter 15a, vorzugsweise für eine Luftfederung, gesichert ist. Mit pneumatischer Beaufschlagung der Steuerleitung 98 schaltet das Steuerventil 100 um in eine Durchlassstellung, in der bei gleichzeitiger Öffnung des Sperrventils 99 eine Querspeisung von Druckluft aus dem Behälter 15a zu den Leitungszweigen 71b, 71c ermöglicht ist.

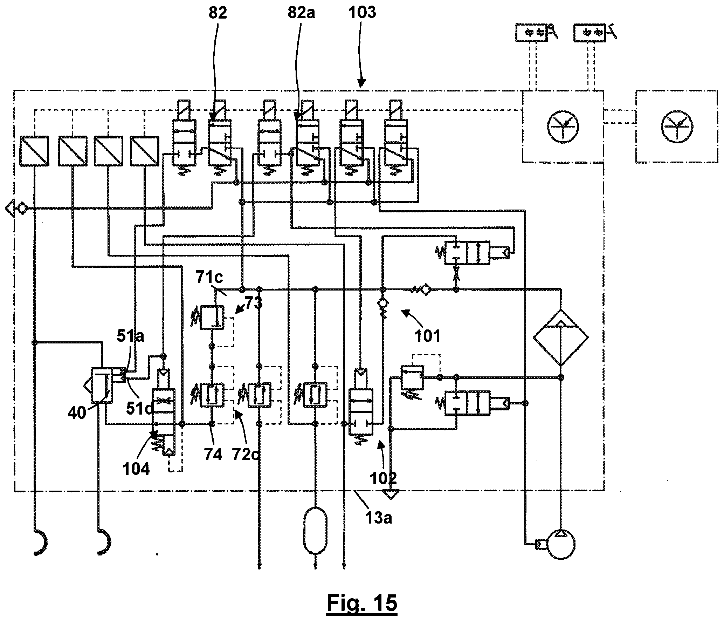

Für das Ausführungsbeispiel gemäß **Fig. 15** ist in dem Leitungszweig 71a abweichend zu den vorherigen Ausführungsformen die Kombination eines in Richtung des Ausgangsanschlusses 13a öffnenden Rückschlagsventils 101 mit einem stromabwärts angeordneten Sperrventil 102 eingesetzt. Das Sperrventil 102 wird über ein Steuerventil 103, hier ein 3/2-Magnetventil, welches von der Steuereinheit 38 angesteuert wird, angesteuert. Indem das Sperrventil 102 in seine Sperrstellung überführt wird, kann eine pneumatische Beaufschlagung des Ausgangsanschlusses 13a gezielt unterbunden werden und beispielsweise erst zu einem gewünschten Zeitpunkt eine Druckluftbeaufschlagung des Ausgangsanschlusses 13 erfolgen. Gemäß Fig. 15 ist in der Versorgungsleitung 74, welche den Leitungszweig 71c mit dem Anhängersteuerventil 40 verbindet, ein schaltbares Drosselventil 104 angeordnet. Der von der Ventilbaugruppe 82a erzeugte Steuerdruck, welcher dem Steueranschluss 51d des Anhängersteuerventils 40 zugeführt wird, wird auch einem Steueranschluss des schaltbaren Drosselventils 104 zugeführt. Für hinreichenden Steuerdruck an diesem Steueranschluss wird das Drosselventil 104 von einer Durchlassstellung in eine Drosselstellung überführt, während ohne Druck an diesem Steueranschluss in Folge einer Feder das Drosselventil 104 seine ungedrosselte Durchlassstellung einnimmt. Entgegengesetzt zu dem genannten Steuerdruck wirkt auf das Drosselventil 104 ein weiterer Steuerdruck, welcher dem Druck in der Versorgungsleitung 74 entspricht. In der Drosselstellung des Drosselventils 104 ist eine Abrisssicherung gebildet, wie diese insbesondere aus der Patentanmeldung EP 1 022 204 A2 hervorgeht. Es versteht sich, dass abweichend zu dem Ausführungsbeispiel gemäß Fig. 15 auch eine (schaltbare) Drossel in das Anhängersteuerventil 40 integriert sein kann.

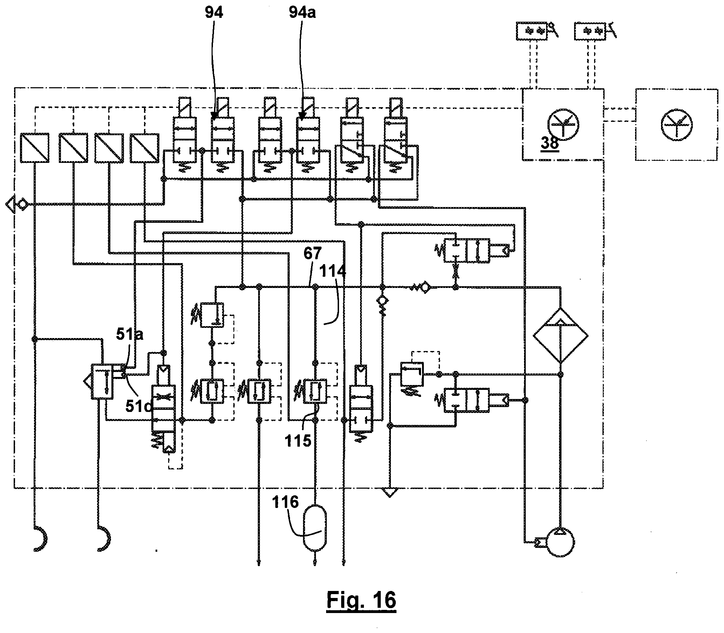

Für das in **Fig. 16** dargestellte Ausführungsbeispiel sind anstelle der Ventilbaugruppen 82, 82a gemäß Fig. 15 Ventilbaugruppen 94, 94a jeweils mit zwei Sperrventilen als 2/2-Magnetventile ausgebildet, welche im Wesentlichen entsprechend der Ventilbaugruppe 94 gemäß Fig. 13 ausgebildet und mit dem Entlüftungsanschluss 60a oder der Zentralleitung 67 verbindbar sind und durch die Steuereinheit 38 angesteuert werden können. Hierbei erfolgt eine Belüftung durch die Ventilbaugruppen 94, 94a durch Verbindung mit der Zentralleitung 67. An die Zentralleitung 67 ist eine Zweigleitung 114 angeschlossen, die über ein Überströmventil 115 mit einem Druckluftbehälter 116 verbunden ist, der der Speisung sämtlicher Verbraucherkreise dient.

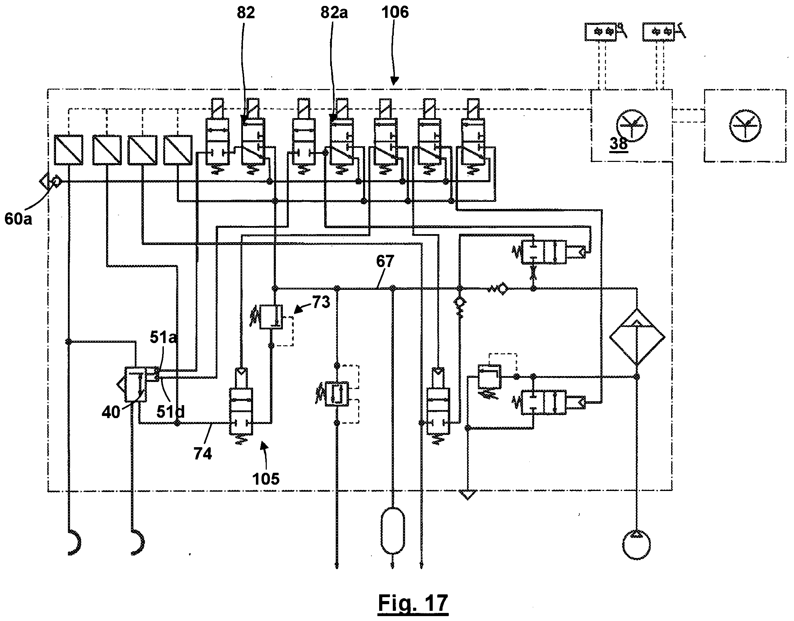

Gemäß **Fig. 17** ist in der Versorgungsleitung 74 ein Sperrventil 105, hier in Ausbildung als pneumatisch angesteuertes 2/2-Wegeventil, angeordnet. Das Sperrventil 105 kann durch die Steuereinheit 38 über ein Steuerventil 106, hier ein 3/2-Magnetventil, welches den Steueranschluss des Steuerventils 106 in der Belüftungsstellung mit der Zentralleitung 67 verbindet und in der Entlüftungsstellung mit dem Entlüftungsanschluss 60a verbindet, in seine Durchlassstellung und seine Sperrstellung gesteuert werden. Über die Überführung des Sperrventils 105 in seine Sperrstellung kann eine Druckbeaufschlagung des Versorgungsanschlusses des Anhängersteuerventils 40 unterbunden werden. Dies erfolgt vorzugsweise, wenn erkannt wird, dass das elektromagnetische Bremssystem 3 nicht ordnungsgemäß funktioniert. Wird dies beispielsweise im Stand des Nutzfahrzeugs erkannt, kann vermieden werden, dass die Bremsen des Anhängers gelöst werden, womit ein Wegfahren unterbunden ist. Zusätzlich möglich ist, dass das Sperrventil 105 bei geeigneter Ansteuerung durch die Steuereinheit 38 über das Steuerventil 106 die Funktion des Überströmventils 72c übernimmt. Somit ist in diesem Leitungszweig lediglich das Druckbegrenzungsventil 73 und das Sperrventil 105 anzuordnen. Das Überströmventil kann hier somit entfallen.

In den Fig. 15 bis 17 erfolgt über die Ventilbaugruppe 82 die Ansteuerung des Steueranschlusses 51a entsprechend eines Betriebsbremswunsches. Ebenfalls möglich ist, dass die Steuereinheit 38 die Ventilbaugruppe 82 entsprechend eines Feststellbremssignals ansteuert, wobei in diesem Fall der in den Fig. 15 bis 17 mit dem Bezugszeichen 51a gekennzeichnete Steueranschluss des Anhängersteuerventils 40 dem zuvor mit 51b gekennzeichneten Steueranschluss entspricht.

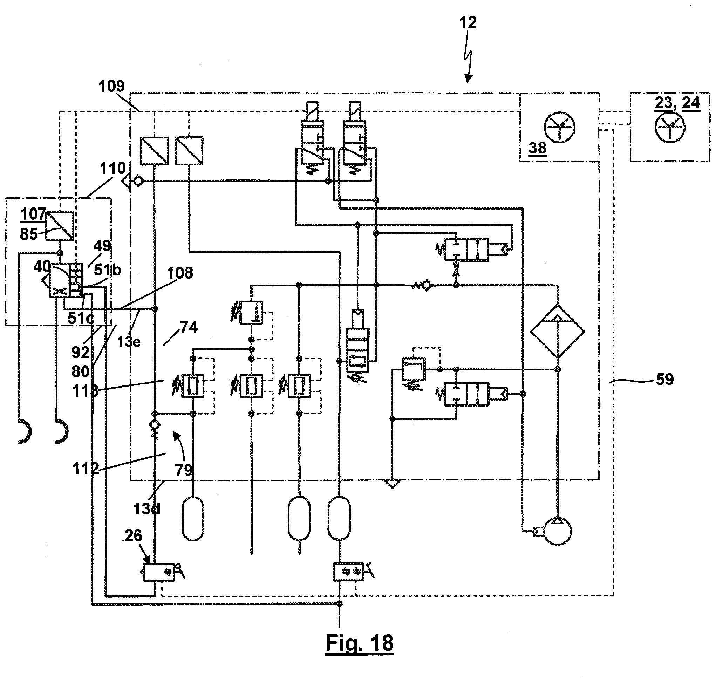

**Fig. 18** zeigt eine Ausführungsform, bei der das Anhängersteuerventil 40 in einem Anhängersteuerventil-Modul 107 als singuläre Baueinheit extern von der Baueinheit 59 und der Druckluftaufbereitungseinrichtung 12 angeordnet ist. Grundsätzlich ist hierbei die Baueinheit 59 ähnlich zu Fig. 11 ausgebildet. Die Versorgungsleitung 74 verzweigt hier aber in zwei Leitungszweige 112, 113, von welchen ein Leitungszweig 112 über das Rückschlagventil 79 und den Ausgangsanschluss 13d mit dem Betätigungsorgan 26 pneumatisch verbunden ist. Der andere Leitungszweig 113 der Versorgungsleitung 74 ist mit einem Ausgangsanschluss 13e der Baueinheit 59 verbunden, der dann über eine Leitung mit einem Versorgungsanschluss 108 des Anhängersteuerventil-Moduls 107 pneumatisch verbunden ist. In diesem Fall ist der von dem Betätigungsorgan 26 beaufschlagte Steueranschluss 80 nicht an der Baueinheit 59 vorgesehen. Vielmehr ist der Steueranschluss 80 an dem Anhängersteuerventil-Modul 107 vorgesehen. Entsprechendes gilt für den Steueranschluss 92. Darüber hinaus verfügt die Baueinheit 12 über einen elektrischen Anschluss 109. Über den Anschluss 109 kann einerseits der Druckluftaufbereitungseinrichtung 12 und der Steuereinheit 38 das Signal des Sensor 85 zugeführt werden, welcher in diesem Fall auch integraler Bestandteil des Anhängersteuerventil-Moduls 107 ist. Andererseits kann über den Anschluss 109 von der Steuereinheit 38 ein Steuersignal über einen entsprechenden elektrischen Steueranschluss 110 dem Anhängersteuerventil-Modul 107 zugeführt werden, der dann zur Beaufschlagung des elektrischen Steueranschlusses 49 des Anhängersteuerventils 40 genutzt werden kann. Es versteht sich, dass (zusätzlich oder alternativ) auch bei extern von der Baueinheit 59 angeordnetem Anhängersteuerventil-Modul 107 eine elektropneumatische Steuerung eines Steueranschlusses des Anhängerbremsventils 40 möglich ist. In diesem Fall erzeugt die Steuereinheit 38 elektropneumatisch einen Steuerdruck, welcher dann über einen Ausgangsanschluss der Baueinheit 59 einem Steueranschluss des Anhängersteuerventil-Moduls 107 zugeführt wird.

Bei den Datenbussen 30, 7 handelt es sich vorzugsweise um einen Datenbus des Typs J1939.

### BEZUGSZEICHENLISTE

- 1: Nutzfahrzeug-Betriebsanlage
- 2: Druckluftanlage
- 3: elektromechanisches Bremssystem
- 4: Schnittstelle
- 5: Zugfahrzeug-Bremssignal
- 6: Zugfahrzeug-Bremssignal
- 7: Datenbus
- 8: analoge Leitung
- 9: Kompressor
- 10: Versorgungsleitung
- 11: Versorgungsanschluss
- 12: Druckluftaufbereitungseinrichtung
- 13: Anschluss
- 14: Verbraucherkreise
- 15: Behälter
- 16: Anhängersteuerventil
- 17: Anhängersteuerkreis
- 18: Kupplungskopf Vorrat
- 19: Kupplungskopf Bremse
- 20: elektromechanischer Bremsaktuator
- 21: Nutzfahrzeug
- 22: Zugfahrzeug
- 23: Steuereinheit
- 24: Steuereinheit
- 25: Betätigungsorgan Betriebsbremse
- 26: Betätigungsorgan Feststellbremse
- 27: Leitung
- 28: Leitung
- 29: Leitung
- 30: Datenbus
- 31: elektrische Versorgungsleitung
- 32: Batterie
- 33: Batterie
- 34: Generator
- 35: Eingangsanschluss
- 36: Eingangsanschluss
- 37: Leitung
- 38: Steuereinheit
- 39: Komponente
- 40: Anhängersteuerventil
- 41: Eingangsanschluss
- 42: Eingangsanschluss
- 43: Sensor
- 44: Sensor
- 45: Betätigungs- und Anzeigeeinrichtung
- 46: Ausgangsanschluss
- 47: Ausgangsanschluss
- 48: elektrischer Ausgangsanschluss
- 49: elektrischer Steueranschluss
- 50: pneumatischer Ausgangsanschluss
- 51: pneumatischer Steueranschluss
- 52: elektrischer Ausgangsanschluss
- 53: elektrischer Steueranschluss
- 54: elektrische Leistungsquelle
- 55: pneumatischer Ausgangsanschluss
- 56: Steueranschluss
- 57: Ausgangsanschluss
- 58: Gehäuse
- 59: Baueinheit
- 60: Entlüftungsanschluss
- 61: Eingangsleitung
- 62: Entlüftungsleitung
- 63: Leitungszweig
- 64: Leitungszweig
- 65: Sicherheitsventil
- 66: Druckregler
- 67: Zentralleitung
- 68: Rückschlagventil
- 69: Bypassleitung
- 70: Regenerationsventil
- 71: Leitungszweig
- 72: Überströmventil
- 73: Druckbegrenzungsventil
- 74: Versorgungsleitung
- 75: Versorgungsanschluss
- 76: Versorgungsanschluss
- 77: Relaisventil
- 78: Federspeicher-Feststellbremse
- 79: Rückschlagventil
- 80: Steueranschluss
- 81: Steuerleitung
- 82: Ventilbaugruppe
- 83: 2/2-Magnetventil
- 84: 3/2-Magnetventil
- 85: Drucksensor
- 86: Drucksensor
- 87: Drucksensor
- 88: Steuerventil
- 89: Steuerventil
- 90: Rückschlagventil
- 91: Steuerleitung
- 92: Steueranschluss
- 93: Überströmventil
- 94: Ventilbaugruppe
- 95: 2/2-Magnetventil
- 96: 2/2-Magnetventil
- 97: Steuerventil
- 98: Steuerleitung
- 99: Sperrventil
- 100: Steuerventil
- 101: Rückschlagventil
- 102: Sperrventil
- 103: Steuerventil
- 104: Drosselventil
- 105: Sperrventil
- 106: Steuerventil
- 107: Anhängersteuerventil-Modul
- 108: Versorgungsanschluss
- 109: Anschluss
- 110: Steueranschluss
- 111: Lufttrockner
- 112: Leitungszweig
- 113: Leitungszweig
- 114: Zweigleitung
- 115: Überströmventil
- 116: Druckluftbehälter

## Patentansprüche

1. Nutzfahrzeug-Betriebsanlage (1) mit
a) einem über mindestens eine Steuereinheit (23, 24) gesteuerten elektromechanischen Bremssystem (3), welches entsprechend einem elektrischen Zugfahrzeug-Bremssignal (5, 6) betätigt wird, und
b) einer pneumatischen Druckluftaufbereitungseinrichtung (12) mit
ba) einer Steuereinheit (38) zur Steuerung von Funktionen der Druckluftaufbereitungsanlage (12),
bb) einem Eingangsanschluss (36) für ein Bremssignal, welches mit dem elektrischen Zugfahrzeug-Bremssignal (5, 6) zumindest korreliert, und
bc) einem an einen Anhänger anschließbaren Ausgangsanschluss (46, 47; 13e; 109), dem ein mit einer Steuereinheit (38) der Druckluftaufbereitungseinrichtung (12) erzeugtes Signal zuführbar ist, welches von dem über den elektrischen Eingangsanschluss (36) der Steuereinheit (38) zugeführten Bremssignal abhängig ist.
c) wobei die mindestens eine Steuereinheit (23, 24) für das elektromechanische Bremssystem (3) und der oder ein Eingangsanschluss (36) der Steuereinheit (38) der Druckluftaufbereitungseinrichtung (12) über eine Steuerleitung miteinander verbunden sind, über die das Bremssignal, welches mit dem elektrischen Zugfahrzeug-Bremssignal (5, 6) zumindest korreliert, übertragen wird und
d) das dem Eingangsanschluss zugeführte, mit dem elektrischen Zugfahrzeug-Bremssignal zumindest korrelierende Bremssignal ein Bremssignal einer Betriebsbremse ist, wobei dieses Bremssignal über ein Bremspedal erzeugt wird.

2. Nutzfahrzeug-Betriebsanlage (1) nach Anspruch 1, **dadurch gekennzeichnet, dass** mindestens ein elektrischer Eingangsanschluss (36) und die Steuereinheit (38) der Druckluftaufbereitungseinrichtung (12) derart ausgestaltet sind und der mindestens eine elektrische Eingangsanschluss (36) mit der Steuereinheit (38) der Druckluftaufbereitungseinrichtung (12) derart verbunden ist, dass ein elektrisches Bremssignal, welches mit dem elektrischen Zugfahrzeug-Bremssignal (5, 6) zumindest korreliert, von zwei Steuereinheiten (23, 24), die für eine redundante Ansteuerung des elektromechanischen Bremssystems (3) zuständig sind, übertragbar ist, so dass dieses von der Steuereinheit (38) verarbeitet werden kann.

3. Nutzfahrzeug-Betriebsanlage (1) nach Anspruch 1 oder 2, **dadurch gekennzeichnet, dass** ein Speiseanschluss vorhanden ist, über welchen die Druckluftaufbereitungseinrichtung (12) mit elektrischer Leistung von mindestens einer von zwei redundanten Batterien (32, 33) des elektromechanischen Bremssystems (3) versorgt wird.

4. Nutzfahrzeug-Betriebsanlage (1) nach Anspruch 3, **dadurch gekennzeichnet, dass** der elektrische Speiseanschluss über eine externe Steuereinheit (23, 24) für das elektromechanische Bremssystem (3) mit mindestens einer Batterie (32, 33) verbunden ist.

5. Nutzfahrzeug-Betriebsanlage (1) nach einem der Ansprüche 1 bis 4, **dadurch gekennzeichnet, dass** mindestens ein elektrischer Eingangsanschluss (36) für ein elektrisches Bremssignal, welches mit dem elektrischen Zugfahrzeug-Bremssignal (5, 6) zumindest korreliert, als BUS-Anschluss und/oder als analoger Anschluss ausgebildet ist.

6. Nutzfahrzeug-Betriebsanlage (1) nach einem der vorhergehenden Ansprüche, **dadurch gekennzeichnet, dass** in die Druckluftaufbereitungseinrichtung (12) ein Anhängersteuerventil (40) integriert ist.

7. Nutzfahrzeug-Betriebsanlage (1) nach Anspruch 6, **dadurch gekennzeichnet, dass** das Anhängersteuerventil (40)
- einen elektrischen Steueranschluss (49), der mit der Steuereinheit (38) der Druckluftaufbereitungseinrichtung (12) verbunden ist, sowie
- einen pneumatischen Steueranschluss (51)
besitzt, wobei sowohl über den elektrischen Steueranschluss (49) und als auch über den pneumatischen Steueranschluss (51) ein Bremssteuerdruck an dem an den Anhänger anschließbaren Ausgangsanschluss (47) erzeugt werden kann.

8. Nutzfahrzeug-Betriebsanlage (1) nach Anspruch 6 oder 7, **dadurch gekennzeichnet, dass** das Anhängersteuerventil (40) einen Steueranschluss (51b) besitzt, über welchen eine Steuerung des Anhängersteuerventils (40) entsprechend einer manuellen Betätigung eines Betätigungsorgans (26) einer Feststellbremse (78) möglich ist.

9. Nutzfahrzeug-Betriebsanlage (1) nach einem der vorhergehenden Ansprüche, **dadurch gekennzeichnet, dass** ein mit einem Behälter (15a) gekoppelter pneumatischer Anschluss (13a) der Druckluftaufbereitungseinrichtung (12) sowohl für die Druckluftversorgung eines Verbraucherkreises (14a) als auch für die Druckluftversorgung des Anhängersteuerventils (40) zuständig ist.

10. Nutzfahrzeug-Betriebsanlage (1) nach einem der vorhergehenden Ansprüche, **dadurch gekennzeichnet, dass** lediglich ein Behälter mit einem pneumatischer Anschluss der Druckluftaufbereitungseinrichtung (12) gekoppelt ist, der für die Druckluftversorgung sämtlicher Verbraucherkreise (14) und die Druckluftversorgung des Anhängersteuerventils (40) zuständig ist.

11. Nutzfahrzeug-Betriebsanlage (1) nach einem der Ansprüche 5 bis 10, **dadurch gekennzeichnet, dass** in dem Anhängersteuerventil (40) ein Drosselventil angeordnet ist.

12. Nutzfahrzeug-Betriebsanlage (1) nach einem der Ansprüche 5 bis 10, **dadurch gekennzeichnet, dass** stromaufwärts des Versorgungsanschlusses des Anhängersteuerventils (40) ein Drosselventil (104) angeordnet ist.

13. Nutzfahrzeug-Betriebsanlage (1) nach einem der Ansprüche 5 bis 12, **dadurch gekennzeichnet, dass** stromaufwärts des Versorgungsanschlusses des Anhängersteuerventils (12) ein Sperrventil (105) angeordnet ist.

14. Nutzfahrzeug-Betriebsanlage (1) nach einem der vorhergehenden Ansprüche, **dadurch gekennzeichnet, dass** das Anhängersteuerventil (40) einen Steueranschluss für eine Betriebsbremsung besitzt und einen Steueranschluss für eine Feststellbremse besitzt, der als Redundanzanschluss für eine Betriebsbremsung einsetzbar ist.

15. Nutzfahrzeug-Betriebsanlage (1) nach einem der vorhergehenden Ansprüche, **dadurch gekennzeichnet, dass** ein Vorsteuerventil (82a) vorgesehen ist, welches sowohl für die Steuerung des Anhängersteuerventils (40) als auch für ein Druckluftmanagement zuständig ist.

16. Nutzfahrzeug-Betriebsanlage (1) nach einem der vorhergehenden Ansprüche, **dadurch gekennzeichnet, dass** die Steuereinheit (38) zur Herbeiführung einer Streckbremsfunktion und/oder einer Prüffunktion ausgebildet ist.

## Claims

1. Operating system (1) for a commercial vehicle with
a) an electromechanical brake system (3) which is controlled by at least one control unit (23, 24) and which is actuated corresponding to an electrical tractor brake signal (5, 6) and
b) a pneumatical compressed air processing device (12) with
ba) a control unit (38) for controlling functions of the compressed air processing system (12),
bb) an input port (36) for a brake signal which at least correlates to the electrical tractor brake signal (5, 6) and
bc) an output port (46, 47; 13e; 109) which can be connected to a trailer and to which a signal generated by a control unit (38) of the compressed air processing device (12) can be supplied, the signal depending on the brake signal supplied via the electrical input port (36) of the control unit (38),
c) the at least one control unit (23, 24) of the electromechanical brake system (3) and the or an input port (36) of the control unit (38) of the compressed air processing device (12) being connected with each other by a control line by which the brake signal which at least correlates to the electrical tractor brake signal (5, 6) is transmitted and
d) the brake signal which is supplied to the input port and which at least correlates with the electrical tractor brake signal (5, 6) being a brake signal of a service brake which is generated by a brake pedal.

2. Operating system (1) for a commercial vehicle of claim 1, **characterised in that** at least one electrical input port (36) and the control unit (38) of the compressed air processing device (12) have a design and the at least one electrical input port (36) is connected to the control unit (38) of the compressed air processing device (12) such that it is possible to transmit an electrical brake signal which at least correlates to the electrical tractor brake signal (5, 6) from two control units (23, 24) which are responsible for a redundant control of the electromechanical brake system (3) so that it is possible that the electrical brake signal is processed by the control unit (38).

3. Operating system (1) for a commercial vehicle of claim 1 or 2, **characterised in that** a supply port is provided by which the compressed air processing device (12) is supplied with electrical power from at least one of two redundant batteries (32, 33) of the electromechanical brake system (3).

4. Operating system (1) for a commercial vehicle of claim 3, **characterised in that** the electrical supply port is connected via an external control unit (23, 24) of the electromechanical brake system (3) with at least one battery (32, 33).

5. Operating system (1) for a commercial vehicle of one of claims 1 to 4, **characterised in that** at least one electrical input port (36) for an electrical brake signal which at least correlates to the electrical tractor brake signal (5, 6) is formed by a BUS-port and/or an analogue port.

6. Operating system (1) for a commercial vehicle of one of claims 1 to 5, **characterised in that** a trailer control valve (40) is integrated into the compressed air processing device (12).

7. Operating system (1) for a commercial vehicle of claim 6, **characterised in that** the trailer control valve (40) comprises
- an electrical control port (49) which is connected to the control unit (38) of the compressed air processing device (12) and
- a pneumatical control port (51),
wherein it is possible to generate a brake control pressure at the output port (47) connectable to the trailer both via the electrical control port (49) as well as via the pneumatical control port (51).

8. Operating system (1) for a commercial vehicle of claim 6 or 7, **characterised in that** the trailer control valve (40) comprises a control port (51b) by which it is possible to control the trailer control valve (40) corresponding to a manual actuation of an actuation means (26) of a parking brake (78).

9. Operating system (1) for a commercial vehicle of one of claims 1 to 8, **characterised in that** a pneumatical port (13a) of the compressed air processing device (12) coupled to a reservoir (15a) is both responsible for the compressed air supply of a consumer circuit (14a) as well as for the compressed air supply of the trailer control valve (40).

10. Operating system (1) for a commercial vehicle of one of claims 1 to 9, **characterised in that** only one reservoir is coupled to a pneumatical port of the compressed air processing device (12) which is responsible for the compressed air supply of all of the consumer circuits (14) and for the compressed air supply of the trailer control valve (40).

11. Operating system (1) for a commercial vehicle of one of claims 5 to 10, **characterised in that** a throttle valve is arranged in the trailer control valve (40).

12. Operating system (1) for a commercial vehicle of one of claims 5 to 10, **characterised in that** a throttle valve (104) is arranged upstream of the supply port of the trailer control valve (40).

13. Operating system (1) for a commercial vehicle of one of claims 5 to 12, **characterised in that** a blocking valve (105) is arranged upstream of the supply port of the trailer control valve (12).

14. Operating system (1) for a commercial vehicle of one of claims 1 to 13, **characterised in that** the trailer control valve (40) comprises a control port for a service brake action and comprises a control port for a parking brake which can be used as a redundant port for a service brake action.

15. Operating system (1) for a commercial vehicle of one of claims 1 to 14, **characterised in that** a pilot valve (82a) is provided which is responsible both for the control of the trailer control valve (40) as well as for the compressed air management (16).

16. Operating system (1) for a commercial vehicle of one of claims 1 to 15, **characterised in that** the control unit (38) is configured and designed for providing a stretch brake function and/or a test function.

## Revendications

1. Installation pour véhicule utilitaire (1) avec
a) un système de freinage électromécanique (3), contrôlé par l'intermédiaire d'au moins une unité de commande (23, 24), actionné en fonction d'un signal de freinage électrique de véhicule tracteur (5, 6) et
b) un dispositif de traitement d'air comprimé pneumatique (12) avec
ba) une unité de commande (38) pour la commande de fonctions de l'installation de traitement d'air comprimé (12),
bb) un raccord d'entrée (36) pour un signal de freinage, qui est au moins corrélé avec le signal de freinage électrique de véhicule tracteur (5, 6) et
bc) un raccord de sortie (46, 47 ; 13e ; 109), dans lequel un signal généré avec une unité de commande (38) du dispositif de traitement d'air comprimé (12) peut être introduit, qui dépend du signal de freinage introduit dans l'unité de commande (38) par l'intermédiaire du raccord d'entrée électrique (36),
c) dans lequel l'au moins une unité de commande (23, 24) pour le système de freinage électromécanique (3) et le ou un raccord d'entrée (36) de l'unité de commande (38) du dispositif de traitement d'air comprimé (12) sont reliés entre eux par l'intermédiaire d'une ligne de commande par l'intermédiaire de laquelle le signal de freinage, qui est au moins corrélé avec le signal de freinage électrique de véhicule tracteur (5, 6), est transmis et
d) le signal de freinage introduit dans le raccord d'entrée et au moins corrélé avec le signal de freinage électrique de véhicule tracteur est un signal de freinage d'un frein de service, dans lequel ce signal de freinage est générée par l'intermédiaire d'une pédale de freinage.

2. Installation pour véhicule utilitaire (1) selon la revendication 1, **caractérisée en ce qu'**au moins un raccord d'entrée électrique (36) et l'unité de commande (38) du dispositif de traitement d'air comprimé (12) sont conçus de façon à ce que l'au moins un raccord d'entrée électrique (36) soit relié avec l'unité de commande (38) du dispositif de traitement d'air comprimé (12) de façon à ce qu'un signal de freinage électrique, qui est au moins corrélé avec le signal de freinage électrique de véhicule tracteur (5, 6), peut être transmis par deux unités de commande (23, 24), qui permettent une commande redondante du système de freinage électromécanique (3), de façon à ce qu'il puisse être traité par l'unité de commande (38).

3. Installation pour véhicule utilitaire (1) selon la revendication 1 ou 2, **caractérisée en ce qu'**un raccord d'alimentation est prévu, par l'intermédiaire duquel le dispositif de traitement d'air comprimé (12) est alimenté en puissance électrique par au moins une de deux batteries redondantes (32, 33) du système de freinage électromécanique (3).

4. Installation pour véhicule utilitaire (1) selon la revendication 3, **caractérisée en ce que** le raccord d'alimentation électrique est relié avec au moins une batterie (32, 33) par l'intermédiaire d'une unité de commande externe (23, 24) pour le système de freinage électromécanique (3).

5. Installation pour véhicule utilitaire (1) selon l'une des revendications 1 à 4, **caractérisée en ce qu'**au moins un raccord d'entrée électrique (36) pour un signal de freinage électrique, qui est au moins corrélé avec le signal de freinage électrique de véhicule tracteur (5, 6), est conçu comme une liaison bus et/ou comme une liaison analogique.

6. Installation pour véhicule utilitaire (1) selon l'une des revendications précédentes, **caractérisée en ce qu'**une soupape de commande de remorque (40) est intégrée dans le dispositif de traitement d'air comprimé (12).

7. Installation pour véhicule utilitaire (1) selon la revendication 6, **caractérisé en ce que** la soupape de commande de remorque (40) comprend
- un raccord de commande électrique (49), qui est relié avec l'unité de commande (38) du dispositif de traitement d'air comprimé (12), et
- un raccord de commande pneumatique (51)
une pression de commande de freinage pouvant être générée, au niveau du raccord de sortie (47) pouvant être connecté à la remorque, par l'intermédiaire du raccord de commande électrique (49) ainsi que par l'intermédiaire du raccord de commande pneumatique (51).

8. Installation pour véhicule utilitaire (1) selon la revendication 6 ou 7, **caractérisée en ce que** la soupape de commande de la remorque (40) comprend un raccord de commande (51b), par l'intermédiaire duquel une commande de la soupape de commande de remorque (40) est possible en fonction d'un actionnement manuel d'un organe d'actionnement (26) d'un frein de stationnement (78).

9. Installation pour véhicule utilitaire (1) selon l'une des revendications précédentes, **caractérisée en ce qu'**un raccord pneumatique (13a) du dispositif de traitement d'air comprimé (12), couplé avec un récipient (15a), permet l'alimentation en air comprimé d'un circuit consommateur (14a) ainsi que l'alimentation en air comprimé de la soupape de commande de remorque (40).

10. Installation pour véhicule utilitaire (1) selon l'une des revendications précédentes, **caractérisée en ce qu'**un seul récipient est couplé avec un raccord pneumatique du dispositif de traitement d'air comprimé (12), qui permet l'alimentation en air comprimé de l'ensemble des circuits consommateurs (14) et l'alimentation en air comprimé de la soupape de commande de remorque (40).

11. Installation pour véhicule utilitaire (1) selon l'une des revendications 5 à 10, **caractérisée en ce que**, dans la soupape de commande de remorque (40), se trouve une soupape d'étranglement.

12. Installation pour véhicule utilitaire (1) selon l'une des revendications 5 à 10, **caractérisé en ce que**, en amont du raccord d'alimentation de la soupape de commande de remorque (40), se trouve une soupape d'étranglement (104).

13. Installation pour véhicule utilitaire (1) selon l'une des revendications 5 à 12, **caractérisée en ce que**, en amont du raccord d'alimentation de la soupape de commande de remorque (12), se trouve une soupape d'arrêt (105).

14. Installation pour véhicule utilitaire (1) selon l'une des revendications précédentes, **caractérisée en ce que** la soupape de commande de remorque (40) comprend un raccord de commande pour un freinage de service et un raccord de commande pour un frein de stationnement, qui peut être utilisé en tant que raccord redondant pour un freinage de service.

15. Installation pour véhicule utilitaire (1) selon l'une des revendications précédentes, **caractérisé en ce qu'**une soupape de précommande (82a) est prévue, qui permet aussi bien de commander la soupape de commande de remorque (40) que de gérer l'air comprimé.

16. Installation pour véhicule utilitaire (1) selon l'une des revendications précédentes, **caractérisé en ce que** l'unité de commande (38) est conçue pour l'exécution d'une fonction de frein de maintien en ligne et/ou d'une fonction de contrôle.
